(19) Europäisches Patentamt
European Patent Office
Office européen des brevets

(11) EP 4 418 403 A1

(12) **EUROPEAN PATENT APPLICATION**
published in accordance with Art. 153(4) EPC

(43) Date of publication:
**21.08.2024 Bulletin 2024/34**

(21) Application number: **23887157.8**

(22) Date of filing: **13.10.2023**

(51) International Patent Classification (IPC):
***H01M 10/0587*** *(2010.01)* ***H01M 10/42*** *(2006.01)*
***H01M 10/052*** *(2010.01)* ***C09J 7/38*** *(2018.01)*
***C09J 133/08*** *(2006.01)*

(52) Cooperative Patent Classification (CPC):
**C09J 7/38; C09J 133/08; H01M 10/052; H01M 10/0587; H01M 10/42**

(86) International application number:
**PCT/KR2023/015806**

(87) International publication number:
**WO 2024/106758 (23.05.2024 Gazette 2024/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.11.2022 KR 20220154682**

(71) Applicant: **LG Energy Solution, Ltd.**
**Seoul 07335 (KR)**

(72) Inventor: **PARK, Jeong Eon**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **ELECTRODE ASSEMBLY, AND SECONDARY BATTERY, BATTERY PACK AND TRANSPORTATION MEANS INCLUDING SAME**

(57) An electrode assembly includes a positive electrode, a negative electrode, and a separator positioned between the positive electrode and the negative electrode such that the positive electrode, the negative electrode and the separator are stacked and wound. The electrode assembly further includes an adhesive tape adhered to an inside of the electrode assembly, wherein the adhesive tape includes a porous support and an adhesive layer provided on the porous support and configured to absorb an electrolyte solution and to expand such that it forms an ion migration path after coming into contact with the electrolyte solution. A secondary battery, a battery pack, and a transportation means include such an electrode assembly.

[Figure 1]

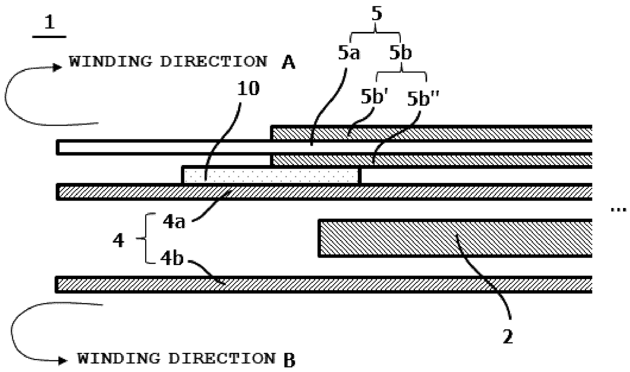




Processed by Luminess, 75001 PARIS (FR)

## Description

CROSS-REFERENCE TO RELATED APPLICATIONS

The present invention is a national phase entry under 35 U.S.C S 371 of International Application No. PCT/KR2023/015806 filed October 13, 2023, which claims the benefit of Korean Patent Application No. 10-2022-0154682 filed in the Korean Intellectual Property Office on November 17, 2022, with the Korean Intellectual Property Office, the entire contents of which are incorporated herein by reference.

[Technical Field]

The present specification relates to an electrode assembly in which a positive electrode, a negative electrode, and a separator provided between the positive electrode and the negative electrode are stacked and wound, and a secondary battery, a battery pack, and a transportation means including the electrode assembly.

[Background Art]

For a cylindrical, prismatic, or pouch battery, a jelly-roll type electrode assembly is typically manufactured by winding long electrodes each having a predetermined width together with a separator. In a cylindrical battery manufactured by inserting such a jelly-roll type electrode assembly into a battery case, the electrodes undergo repeated contraction/expansion during charging and discharging of the battery. In particular, when a tab (in tab) is located in a core of the jelly-roll type electrode assembly or contraction/expansion of the electrode assembly occurs due to a silicon-based active material added in a negative electrode, the pressure acting on a core portion of the electrode assembly greatly increases.

Recently, as low-resistance/high-capacity designs are becoming more common, cases where the jelly-roll type electrode assembly includes multiple tabs or a silicon-based active material is added are also becoming more common. Accordingly, the possibility of deformation of the electrode assembly located in the core portion due to the contraction/expansion of the electrode assembly is increasing. In particular, there is a problem that, when the separator located between the negative electrode and the positive electrode is damaged, the negative electrode and the positive electrode may directly contact each other, causing heat generation and potential ignition due to an internal short-circuit.

In order to solve the problems of separator damage and internal short-circuit caused by the deformation of the electrode assembly, it is necessary to develop a technology capable of protecting the positive electrode and separator and suppressing the occurrence of internal short-circuit.

BRIEF SUMMARY OF THE INVENTION

[Technical Problem]

The present specification is intended to provide an electrode assembly in which a positive electrode, a negative electrode, and a separator provided between the positive electrode and the negative electrode are stacked and wound, and a secondary battery, a battery pack, and a transportation means including the electrode assembly.

[Technical Solution]

An exemplary embodiment of the present specification provides an electrode assembly in which a positive electrode, a negative electrode, and a separator provided between the positive electrode and the negative electrode are stacked and wound, the electrode assembly further including an adhesive tape adhered to an inside of the wound electrode assembly, wherein the adhesive tape includes a porous support and an adhesive layer provided on the porous support and configured to absorb an electrolyte solution and to expand to form an ion migration path after coming into contact with the electrolyte solution.

In another exemplary embodiment of the present specification, the adhesive tape may be adhered at least one of between the positive electrode and the separator, and between the negative electrode and the separator.

In another exemplary embodiment of the present specification, the positive electrode and the negative electrode may each include a current collector and an active material layer provided on both surfaces of the current collector, and the adhesive tape may be adhered at least one of between an end portion of the active material layer of the positive electrode on a winding core side and the separator, and between an end portion of the active material layer of the negative electrode on the winding core side and the separator.

In another exemplary embodiment of the present specification, the positive electrode may include a positive electrode current collector and a positive electrode active material layer provided on both surfaces of the positive electrode

current collector, and the adhesive tape may be adhered to cover an end portion of the positive electrode active material layer and a surface of the positive electrode current collector adjacent to the end portion of the positive electrode active material layer.

In another exemplary embodiment of the present specification, the positive electrode and the negative electrode may each include a current collector and an active material layer provided on both surfaces of the current collector, and at least one of the positive electrode and the negative electrode may include two or more coated portions spaced apart from each other in a winding direction of the electrode assembly and provided with the active material layer on the current collector; and an uncoated portion not provided with the active material layer on the current collector between the two or more coated portions, and the adhesive tape may be adhered to cover the uncoated portion and an end portion of the active material layer on the uncoated portion side.

In another exemplary embodiment of the present specification, the positive electrode and the negative electrode may each include a current collector and an active material layer provided on both surfaces of the current collector.

In another exemplary embodiment of the present specification, in the winding direction of the electrode assembly, from an end portion of the separator on a winding core side, an end portion of the negative electrode active material layer on the winding core side may be closer than an end portion of the positive electrode active material layer on the winding core side.

In another exemplary embodiment of the present specification, the negative electrode may include a coated portion provided with the active material layer on the current collector; and an uncoated portion not provided with the active material layer on both end portions of the current collector in the winding direction of the electrode assembly, and the adhesive tape may be adhered on uncoated portion of the negative electrode on the winding core side.

In another exemplary embodiment of the present specification, the adhesive tape may be adhered on the uncoated portion that the end portion of the positive electrode active material layer on the winding core side faces with respect to a direction of the winding core side.

In another exemplary embodiment of the present specification, the adhesive tape may be provided on a winding core-side surface of both surfaces of the uncoated portion that the end portion of the positive electrode active material layer on the winding core side faces with respect to the direction of the winding core side.

In another exemplary embodiment of the present specification, the negative electrode may have a negative electrode tab formed on the end portion of the negative electrode current collector on the winding core side.

In another exemplary embodiment of the present specification, the adhesive layer may include an acrylate-based adhesive having an ethylene oxide side chain.

Another exemplary embodiment of the present invention provides a secondary battery including the electrode assembly described above; and a battery case for accommodating the electrode assembly.

In another exemplary embodiment of the present specification, the electrode assembly may have a circular vertical cross-section of a winding core axis, and the battery case may have a cylindrical shape.

Another exemplary embodiment of the present specification provides a battery pack including two or more secondary batteries described above.

Another exemplary embodiment of the present specification provides a transportation means including the battery pack described above. The transportation means is anything that moves luggage, people, and the like, or works while moving, and may be bicycles, heavy equipment, agricultural equipment, vehicles, buses, airplanes, and the like.

[Advantageous Effects]

The electrode assembly according to an exemplary embodiment of the present specification includes an adhesive tape configured to prevent damage to the separator resulting from deformation of the electrode assembly due to contraction/expansion of the electrode during charging and discharging of the battery and to prevent an internal short-circuit between the electrodes, thereby improving the stability and lifespan of the battery.

The electrode assembly according to an exemplary embodiment of the present specification includes an adhesive tape in which ions can migrate and, thus, has an advantage of not impeding ion migration due to the attachment of the tape, thereby causing minimal capacity loss, if any, of the battery.

BRIEF DESCRIPTION OF DRAWINGS

FIG. 1 is a side cross-sectional view of an electrode assembly showing an attached state of an adhesive tape according to an exemplary embodiment of the present specification.

FIG. 2 is a side cross-sectional view of an electrode assembly showing an attached state of an adhesive tape according to an exemplary embodiment of the present specification.

FIG. 3 is a side cross-sectional view of an electrode assembly showing an attached state of an adhesive tape according to an exemplary embodiment of the present specification.

FIG. 4 is a side cross-sectional view of an electrode assembly showing an attached state of an adhesive tape according to an exemplary embodiment of the present specification.

FIG. 5 is a side cross-sectional view of an electrode assembly showing an attached state of an adhesive tape according to an exemplary embodiment of the present specification.

FIG. 6 is a side cross-sectional view of an electrode assembly showing an attached state of an adhesive tape according to an exemplary embodiment of the present specification.

FIG. 7 is a side cross-sectional view of an electrode assembly showing an attached state of an adhesive tape according to an exemplary embodiment of the present specification.

FIG. 8(a) is a side cross-sectional view of an adhesive tape according to an exemplary embodiment of the present specification.

FIG. 8(b) is side cross-sectional view of an adhesive tape according to another exemplary embodiment of the present specification.

FIG. 9 is a side cross-sectional view of a winding process of an electrode stack.

FIG. 10 is a perspective view of a wound electrode stack.

FIG. 11 is a side cross-sectional view of a secondary battery positioned in a battery case accommodating a wound electrode stack.

FIG. 12 is a perspective view of a battery pack according to an exemplary embodiment of the present invention.

FIG. 13 is a perspective view of a vehicle including the battery pack of FIG. 12.

FIG. 14 is a table comparing CT images of winding core portions of secondary batteries after charging and discharging with and without an adhesive tape.

FIG. 15 is a side cross-sectional view of an electrode assembly showing an attached state of an adhesive tape according to a an exemplary embodiment of the present specification.

FIG. 16 is a photograph illustrating whether lithium metal is precipitated after disassembly of a battery that was charged and discharged 50 times.

<Identification of Select Reference Numerals and Symbols>

1: electrode assembly
1a: winding core
1b: outermost side 1c: inside
2: positive electrode
2a: positive electrode current collector
2b: positive electrode active material layer
2b': first positive electrode active material layer
2b": second positive electrode active material layer
2c: positive electrode tab
2d: positive electrode coated portion
2d': first positive electrode coated portion
2d": second positive electrode coated portion
2e: positive electrode uncoated portion
4: separator
4a: first separator
4b: second separator
5: negative Electrode
5a: negative electrode current collector
5b: negative electrode active material layer
5b': first negative electrode active material layer
5b": second negative electrode active material layer
5c: negative electrode tab
10: adhesive tape
11: adhesive layer
12: porous support
20: secondary battery
21: can

22: cap assembly
200: battery pack
201: cylindrical battery cell
202: pack housing
V: transportation means

DETAILED DESCRIPTION OF THE PREFERRED EMBODIMENTS

Hereinafter, the present invention will be described in detail with reference to the drawings. However, it should be noted that the drawings are provided for illustrating the present invention, and the scope of the present invention is not limited by the drawings.

FIG. 9 shows a winding process of an electrode assembly 1, and FIG. 10 is a perspective view of a wound electrode stack.

First, a positive electrode 2, a negative electrode 5, and a separator 4 positioned between the positive electrode 2 and the negative electrode 5 can be stacked.

The separator may include two separators, and as shown in FIG. 9, a first separator 4a positioned between the negative electrode 5 and the positive electrode 2, and an additional second separator 4b positioned on a surface of the positive electrode 2 opposite to a surface in contact with the first separator 4a may be provided. Specifically, the second separator 4b, the positive electrode 2, the first separator 4a, and the negative electrode 5 may be sequentially stacked.

In a winding direction, the second separator 4b, the positive electrode 2, the first separator 4a, and the negative electrode 5 may be sequentially stacked and wound toward the negative electrode 5 side, i.e., toward the inner side, as shown in FIG. 9. When the winding is formed in this configuration, the separator may be exposed to the outermost side 1b in the wound electrode assembly.

If necessary, the winding may be made in an opposite direction to the winding direction illustrated in FIG. 9. When the winding is made in this way, the negative electrode 5 or the negative electrode 5 in combination with the separator 4 may be exposed to the outermost side 1b in the wound electrode assembly. In this configuration, when the negative electrode is exposed to the outermost side 1b, only the outer negative electrode uncoated portion without a negative electrode active material layer is exposed, or the outer negative electrode uncoated portion and the outer negative electrode coated portion may also be exposed to the outermost side 1b.

The electrode assembly 1 wound as shown in FIG. 10 includes an adhesive tape 10 adhered to an inside 1c of the electrode assembly 1.

In the present specification, the inside 1c to which the adhesive tape is adhered refers to a part of the wound electrode assembly excluding the outermost side 1b. In this configuration, when the wound electrode assembly is referred to as a pillar, the outermost side 1b refers to a side exposed to an outside of the pillar, and the inside 1c to which the adhesive tape is adhered includes an entire inner area of the pillar excluding the side.

The positive electrode 2 and the negative electrode 5 may each include a current collector and an active material layer provided on at least one surface of the current collector.

The positive electrode 2 may include a positive electrode current collector 2a and a positive electrode active material layer 2b provided on at least one surface of the positive electrode current collector 2a. The positive electrode active material layer 2b may be provided on both surfaces of the positive electrode current collector 2a, and may include a first positive electrode active material layer 2b' provided on one surface of the positive electrode current collector 2a and a second positive electrode active material layer 2b" provided on an opposite surface to one surface on which the first positive electrode active material layer 2b' is provided.

The positive electrode 2 includes one or more positive electrode tabs 2c, and the positive electrode tabs 2c are located on a positive electrode uncoated portion 2e not provided with the positive electrode active material layer 2b.

In an exemplary embodiment, the positive electrode 2 may include a positive electrode coated portion 2d provided with a positive electrode active material layer on the positive electrode current collector 2a, and a positive electrode uncoated portion 2e not provided with the positive electrode active material layer on one or both end portions of the positive electrode current collector 2a. In this case, the positive electrode tab 2c may be located on the positive electrode uncoated portion 2e located on one or both end portions of the positive electrode current collector 2a, and preferably may be located on the positive electrode uncoated portion 2e on one end portion.

In another exemplary embodiment, the positive electrode 2 may include a positive electrode uncoated portion 2e not provided with a positive electrode active material layer on an outer end portion of the positive electrode current collector 2a, and the positive electrode tab 2c may be formed on the positive electrode uncoated portion 2e.

In another exemplary embodiment, the positive electrode 2 may include two or more positive electrode coated portions 2d spaced apart from each other in a longitudinal direction and provided with the positive electrode active material layer on the positive electrode current collector 2a and a positive electrode uncoated portion 2e not provided

with the positive electrode active material layer between the two or more positive electrode coated portions 2d. In this case, the positive electrode tab 2c may be located on the positive electrode uncoated portion 2e between the two or more positive electrode coated portions 2d, and preferably may be located on the positive electrode uncoated portion 2e between two positive electrode coated portions 2d. In this case, both end portions of the positive electrode 2 may be formed as free edges without a positive electrode uncoated portion.

The positive electrode 2 may include a positive electrode current collector 2a and a positive electrode active material layer 2b provided on both surfaces, i.e., inner and outer surfaces, of the positive electrode current collector 2a, and a first positive electrode active material layer 2b' provided on one surface of the positive electrode current collector 2a and a second positive electrode active material layer 2b" provided on the other surface may be different or the same in terms of provided lengths.

The negative electrode 5 may include a negative electrode current collector 5a and a negative electrode active material layer 5b provided on at least one surface of the negative electrode current collector 5a. The negative electrode active material layer 5b may be provided on both surfaces of the negative electrode current collector 5a, and may include a first negative electrode active material layer 5b' provided on one surface of the negative electrode current collector 5a and a second negative electrode active material layer 5b" provided on an opposite surface to one surface on which the first negative electrode active material layer 5b' is provided.

The negative electrode 5 includes one or more negative electrode tabs 5c, and the negative electrode tabs 5c are located on a negative electrode uncoated portion not provided with the negative electrode active material layer 5b.

In an exemplary embodiment, the negative electrode 5 may include a negative electrode coated portion provided with a negative electrode active material layer on the negative electrode current collector 5a and a negative electrode uncoated portion not provided with the negative active material layer on one or both end portions of the negative electrode current collector 5a. In this configuration, the negative electrode tab 5c may be located on the negative electrode uncoated portion located on one or both end portions of the negative electrode current collector 5a, and preferably may be located on the negative electrode uncoated portion on both end portions, respectively.

In another exemplary embodiment, the negative electrode 5 may include a negative electrode uncoated portion not provided with the active material layer on an end portion of the negative electrode current collector 5a on the winding core side, and a negative electrode tab 5c may be formed on the negative electrode uncoated portion.

The negative electrode 5 may include a negative electrode current collector 5a and a negative electrode active material layer 5b provided on both surfaces of the negative electrode current collector 5a, and a first negative electrode active material layer 5b' provided on one surface of the negative electrode current collector 5a and a second negative electrode active material layer 5b" provided on the other surface may be different or the same in terms of provided lengths.

In another exemplary embodiment, the positive electrode 2 may include two positive electrode coated portions 2d' and 2d" spaced apart from each other in the winding direction of the electrode assembly 1 and provided with the positive electrode active material layer 2b on the positive electrode current collector 2a; and a positive electrode uncoated portion 2e not provided with the positive electrode active material layer on the positive electrode current collector 2a between the two coated portions. One positive electrode tab 2c may be formed on the positive electrode uncoated portion 2e, and the negative electrode 5 may include two negative electrode uncoated portions not provided with the negative electrode active material layer on both end portions of the negative electrode current collector 5a, respectively. A negative electrode tab 5c may be formed on each of the two negative electrode uncoated portions.

The electrode assembly 1 shown in FIGS. 1 to 7 is in a stacked state before winding, and may be wound in a winding direction A or a winding direction B. The arrangement exposed to the outside on the outermost side of the wound electrode assembly is different depending on the winding direction and the length of each stack.

In a first exemplary embodiment, the adhesive tape 10 may be adhered at least one of between the positive electrode 2 and the separator 4, and be positioned between the negative electrode 5 and the separator 4. The positive electrode 2 and the negative electrode 5 may each include a current collector and an active material layer provided on at least one surface of the current collector, and the adhesive tape 10 may be adhered at least one of a position between an end portion of the positive electrode active material layer 2b and the separator 4, and a position between an end portion of the negative electrode active material layer 5b and the separator 4.

FIG. 1 is a view showing an attached state of an adhesive tape according to an exemplary embodiment (1-1) of the present specification. In the 1-1 exemplary embodiment, the adhesive tape 10 may be adhered between the negative electrode 5 and the separator 4. The negative electrode 5 may include a negative electrode current collector 5a and a negative electrode active material layer 5b provided on at least one surface of the negative electrode current collector 5a, and the adhesive tape 10 may be adhered between an end portion of the negative electrode active material layer 5b and the separator 4, and preferably between an end portion of the negative electrode active material layer 5b on the winding core 1a side (i.e., the inner side) and the separator 4. In this case, the end portion of the negative electrode active material layer 5b on the winding core 1a side refers to a portion where winding begins in the winding direction A or the winding direction B in FIG. 1. This is because the corresponding portion is placed on the winding core 1a side in the wound electrode assembly.

FIG. 2 is a view showing an attached state of an adhesive tape according to an exemplary embodiment (1-2) of the present specification. In the 1-2 exemplary embodiment, the adhesive tape 10 may be adhered between the positive electrode 2 and the separator 4. The positive electrode 2 may include a positive electrode current collector 2a and a positive electrode active material layer 2b provided on at least one surface of the positive electrode current collector 2a, and the adhesive tape 10 may be adhered between an end portion of the positive electrode active material layer 2b and the separator 4, and preferably between an end portion of the positive electrode active material layer 2b on the winding core 1a side and the separator 4. In this configuration, the end portion of the positive electrode active material layer 2b on the winding core 1a side refers to a portion where winding begins in the winding direction A or the winding direction B in FIG. 2. This is because the corresponding portion is placed on the winding core 1a side in the wound electrode assembly.

In a second exemplary embodiment, the positive electrode 2 may include a positive electrode current collector 2a and a positive electrode active material layer 2b provided on at least one surface of the positive electrode current collector 2a, and the adhesive tape 10 may be adhered to cover an end portion of the positive electrode active material layer 2b and a surface of the positive electrode current collector 2a adjacent to the end portion of the positive electrode active material layer 2b.

FIG. 3 is a view showing an attached state of an adhesive tape 10 according to an exemplary embodiment 2-1 of the present specification. In the 2-1 exemplary embodiment, the positive electrode 2 may include a positive electrode current collector 2a and a positive electrode active material layer 2b provided on both surfaces of the positive electrode current collector 2a, and the adhesive tape 10 may be adhered to cover an end portion of the positive electrode active material layer 2b and a surface of the positive electrode current collector 2a adjacent to the end portion of the positive electrode active material layer 2b. In this case, the positive electrode tab may be provided on at least one of the positive electrode uncoated portions 2e not provided with the positive electrode active material layer 2b, which is not shown limitedly. Additionally, the adhesive tape 10 may be adhered on both surfaces of the positive electrode current collector 2a.

FIG. 4 is a view showing an attached state of an adhesive tape according to an exemplary embodiment 2-2 of the present specification. In the 2-2 exemplary embodiment, the positive electrode 2 may include a positive electrode current collector 2a, a positive electrode active material layer 2b provided on both surfaces of the positive electrode current collector 2a, and a positive electrode tab 2c provided on a positive electrode uncoated portion 2e not provided with the positive electrode active material layer 2b on the positive electrode current collector 2a, the adhesive tape 10 may be adhered to cover an end portion of the positive electrode active material layer 2b and a surface of the positive electrode current collector 2a adjacent to the end portion of the positive electrode active material layer 2b, and the adhesive tape 10 may also be adhered on the positive electrode uncoated portion 2e provided with the positive electrode tab 2c.

On the positive electrode uncoated portion 2e provided with the positive electrode tab 2c, the adhesive tape 10 may be extended and adhered from the end portion of the positive electrode active material layer 2b to the positive electrode tab 2c. In this configuration, the adhesive tape 10 may be adhered on both surfaces of the positive electrode current collector 2a.

In an exemplary embodiment, the positive electrode 2 and the negative electrode 5 may each include a current collector and an active material layer provided on at least one surface of the current collector, and at least one of the positive electrode 2 and the negative electrode 5 may include two or more coated portions spaced apart from each other in a winding direction of the electrode assembly and provided with the active material layer on the current collector; and an uncoated portion not provided with the active material layer on the current collector between the two or more coated portions, and the adhesive tape 10 may be adhered to cover the uncoated portion and an end portion of the active material layer on the uncoated portion side.

FIG. 5 is a view showing an attached state of an adhesive tape according to a third exemplary embodiment of the present specification. In a third exemplary embodiment, the positive electrode 2 may include a positive electrode current collector 2a and a positive electrode active material layer 2b provided on both surfaces of the positive electrode current collector 2a. The positive electrode 2 may include two positive electrode coated portions 2d’ and 2d" spaced apart from each other in a winding direction of the electrode assembly 1 and provided with the positive electrode active material layer 2b on the positive electrode current collector 2a; and a positive electrode uncoated portion 2e not provided with the positive electrode active material layer 2b on the positive electrode current collector 2a between the two positive electrode coated portions, and the adhesive tape 10 may be adhered to cover the positive electrode uncoated portion 2e and an end portion of the positive electrode active material layer 2b on the positive electrode uncoated portion 2e side.

In a fourth exemplary embodiment, the positive electrode 2 and the negative electrode 5 may each include a current collector and an active material layer provided on both surfaces of the current collector. A first active material layer provided on one surface of the current collector and a second active material layer provided on the other surface may be different or the same in terms of provided lengths. In the winding direction of the electrode assembly 1, from an end portion of the separator 4 on the winding core 1a side, an end portion of the negative electrode active material layer 5b on the winding core 1a side may be closer than an end portion of the positive electrode active material layer 2b on

the winding core 1a side.

The negative electrode 5 may include a negative electrode coated portion provided with a negative electrode active material layer 5b on a negative electrode current collector 5a; and a negative electrode uncoated portion not provided with the negative electrode active material layer 5b on both end portions of the negative electrode current collector 5a in the winding direction of the electrode assembly 1, and the adhesive tape 10 may be adhered on the negative electrode uncoated portion on the winding core 1a side.

In the fourth exemplary embodiment, the adhesive tape 10 may be adhered on the negative electrode uncoated portion that the end portion of the positive electrode active material layer 2b on the winding core 1a side faces with respect to a direction of the winding core 1a side.

In the fourth exemplary embodiment, the adhesive tape 10 may be provided on a winding core 1a-side surface of both surfaces of the negative electrode uncoated portion that the end portion of the positive electrode active material layer 2b on the winding core 1a side faces with respect to the direction of the winding core 1a side.

FIG. 6 is a view showing an attached state of an adhesive tape 10 according to an exemplary embodiment (4-1) of the present specification, and FIG. 7 is a view showing an attached state of an adhesive tape 10 according to an exemplary embodiment (4-2) of the present specification. The adhesive tape 10 of the 4-2 exemplary embodiment is different from the adhesive tape 10 of the 4-1 exemplary embodiment in that the adhesive tape extends to the negative electrode tab 5c and covers the negative electrode tab 5c.

In the 4-1 and 4-2 exemplary embodiments, an end portion of the first negative electrode active material layer 5b' on the winding core 1a side provided on one surface of the negative electrode current collector 5a may be shorter than an end portion of the second negative electrode active material layer 5b" on the winding core 1a side provided on the other surface, and a negative electrode tab 5c may be provided on an end portion of the surface of the negative electrode current collector 5a provided with the first negative electrode active material layer 5b'. In this case, the adhesive tape 10 may be adhered on the negative electrode uncoated portion on the winding core 1a side.

In the 4-1 and 4-2 exemplary embodiments, the adhesive tape 10 may be adhered on the negative electrode uncoated portion that the end portion of the positive electrode active material layer 2b on the winding core 1a side faces with respect to a first separator 4a on the winding core 1a.

In the fourth exemplary embodiment, the adhesive tape 10 may be provided on a surface of the negative electrode current collector 5a, on which the first negative electrode active material layer 5b' is provided, of both surfaces of the negative electrode uncoated portion that the end portion of the positive electrode active material layer 2b on the winding core 1a side faces with respect to the first separator 4a on the winding core 1a side.

The adhesive tape 10 includes a porous support 12 and an adhesive layer 11 provided on the porous support 12.

FIG. 8 is a view illustrating a cross section of the adhesive tape 10. The adhesive layer 11 may be provided on at least one surface of the porous support 12, and may be provided on the entire one surface of the porous support 12 as shown in FIG. 8(a), or may be a pattern layer provided on one surface of the porous support 12 as shown in FIG. 8(b).

The configuration that the adhesive layer 11 is provided as a pattern layer means that the adhesive layer 11 may be provided spaced apart rather than being applied to the entire one surface of the porous support 12 and, specifically, means that a portion where the adhesive is not applied and a portion where the adhesive is applied are divided. In this case, a portion where the adhesive is not applied and a portion where the adhesive is applied may be repeated to form a regular shape. For example, the adhesive may be provided in a pattern such as a stripe, a dot, a wave, or a grid pattern on at least one surface of the porous support 12.

For the porous support 12, one or more films selected from the group consisting of an acrylic film, a polyolefin film, a polyamide film, a polycarbonate film, a polyurethane film, a cellulose acetate film, and a polyester film may be used, for example, but the present application is not limited thereto.

When a polyester film is used as the porous support 12, one or more films selected from the group consisting of a polyethylene terephthalate film, a polyethylene naphthalate film and a polybutylene terephthalate film may be used, and when a cellulose-based porous support 12 is used as the porous support 12, a porous support 12 that includes, for example, a cellulose acetate resin or a cellulose alkylate resin and is manufactured by applying a mixture including the resin to an extrusion or casting process may be used. As the cellulose alkylate, for example, cellulose acetate propionate, cellulose acetate butylate or the like may be used.

A method for manufacturing the porous support 12 by using the resin is not particularly limited, and, for example, a usual film or sheet forming method such as a method of extruding or casting a raw material including the resin and, as necessary, a known additive may be used.

When the porous support 12 as described above has a sheet or film shape, a thickness of the porous support 12 is not particularly limited, and may be, for example, about 10 to 200 um, about 10 to 100 um, about 10 to 50 um, about 15 to 30 μm, or about 15 to 20 um.

The adhesive tape 10 may include an adhesive layer 11, and after being brought into contact with an electrolyte solution, the adhesive layer 11 absorbs the electrolyte solution and expands. Accordingly, the adhesive tape 10 may form an ion migration path. For example, the adhesive layer 11 may expand in a thickness direction and/or a length

direction of the adhesive layer 11 upon contact with the electrolyte solution, thereby forming a stereoscopic structure. In the above, the "stereoscopic structure" of the adhesive tape 10 is formed through an action of an expansion force of the adhesive layer 11 and a peeling force of the porous support 12 of the adhesive tape 10 in contact with the electrolyte, and may include all structures that allow the adhesive layer 11 to be detached from an electrode assembly.

In one example, the stereoscopic structure may include a plurality of shapes protruding in a direction not horizontal to, but rather, preferably perpendicular to, a length direction of the adhesive layer. In the above, the term "length direction" may refer to a direction perpendicular to the thickness direction of the adhesive layer when the adhesive layer is positioned horizontally. In addition, the term "perpendicular" or "horizontal" may refer to "substantially perpendicular or horizontal" within a range that does not impair a desired effect and, for example, may include an error of about ±10 degrees, ±5 degrees, or ±3 degrees.

A center line average roughness (Ra) of a surface of the adhesive layer forming a stereoscopic structure including a plurality of protruding shapes after a contact with the electrolyte solution as described above may be 100 to 250 μm, for example, 150 to 240 um or 155 to 230 um. The center line average roughness (Ra) may be a value measured after 24 hours from the time point of contact with the electrolyte solution. When the center line average roughness of the stereoscopic structure formed by the adhesive layer of the present application is controlled to be within the above-described ranges, the adhesive tape may be effectively detached from an attachment surface of the inside 1c of the electrode assembly. The term "center line average roughness" refers to a value that can be obtained from Equation 1 below in a unit of micrometers when a cross-section of the adhesive layer forming a stereoscopic structure is photographed, a cross-section of a three-dimensional structure is mathematically remodeled from the photographed image to obtain a roughness curve, and then data is extracted by a reference length L in a direction of an average line on the roughness curve, in which the direction of the average line is represented as an x axis, a height direction is represented as a y axis, and the roughness curve is represented by y=f(x).

[Equation 1]

$$R_a = \frac{1}{L}\int_0^L |f(x)|\,dx$$

The center line average roughness may be measured under a specification of ASTM D4417, or may be obtained as defined in JIS B0031 or JIS B0601.

By providing an adhesive tape in which an ion migration path can be formed through a change in the three-dimensional stereoscopic structure, ion migration is not impeded due to the attachment of the tape, thereby resulting in minimal or no capacity loss of the battery.

In one example, the adhesive layer 11 may include a cured product of an adhesive composition, and a polymer included in the adhesive composition in a crosslinked form. For example, the adhesive composition includes a polymer having a polymerization unit derived from a (meth)acrylic acid ester monomer, a monomer having a polar functional group and a crosslinkable monomer containing a crosslinkable functional group. In one example, in the case of a secondary battery manufactured by attaching an adhesive tape including an adhesive layer formed of the adhesive composition to an electrode assembly via the adhesive layer, and inserting the electrode assembly into a battery can, the adhesive layer is deformed, for example, by swelling or expanding, due to the presence of the polar functional group of the monomer having the polar functional group present in the adhesive layer when the adhesive layer comes into contact with an electrolyte injected into the secondary battery. In such a configuration, the adhesive tape forms an ion migration path, and a surface of the adhesive layer has a surface roughness value within a specific range, thereby reducing an adhesive force or peeling force between the electrode assembly and the adhesive layer. Therefore, the adhesive layer is detached from the electrode assembly, resulting in induction of isotropic volume expansion and contraction of the electrode assembly, which has the advantage of not impeding ion migration due to the attachment of the tape, thereby resulting in minimal or no capacity loss of the battery.

The adhesive composition includes a polymer having a polymerization unit, and in one example, the polymer may include, for example, a (meth)acrylic acid ester monomer, a monomer having a polar functional group, and a crosslinkable monomer having a crosslinkable functional group in a polymerized form.

As the (meth)acrylic acid ester monomer included as a polymerization unit in the polymer, for example, an alkyl (meth)acrylate may be used, and in consideration of a cohesive force, a glass transition temperature, an adhesiveness, or the like of the adhesive, alkyl (meth)acrylate having an alkyl group having 1 to 14 carbon atoms may be used. Examples

of such a monomer may include, but are not limited to, one or two or more of methyl (meth)acrylate, ethyl (meth)acrylate, n-propyl (meth)acrylate, isopropyl (meth)acrylate, n-butyl (meth)acrylate, t-butyl (meth)acrylate, sec-butyl (meth)acrylate, pentyl (meth)acrylate, 2-ethylhexyl (meth)acrylate, 2-ethylbutyl (meth)acrylate, n-octyl (meth)acrylate, isooctyl (meth)acrylate, isononyl (meth)acrylate, lauryl (meth)acrylate, and tetradecyl (meth)acrylate.

In the above, the term "(meth)acrylate" refers to an acrylate or a methacrylate, which may be applied to other terms using "(meth)".

The monomer having the polar functional group is a monomer having an excellent affinity with an electrolyte, and is included as a polymerization unit in the polymer of the adhesive composition in order to reduce an adhesive force or peeling force between the electrode assembly and the adhesive layer by being deformed, for example, swelled or expanded when the adhesive layer formed by the adhesive composition is in contact with the electrolyte. In addition, in the present application, by applying a monomer having a specific structure as the monomer having the polar functional group, a stereoscopic structure having a specific surface roughness may be formed when the adhesive tape is in contact with the electrolyte solution. Accordingly, the adhesive tape is detached from the electrode assembly with excellent efficiency, resulting in induction of isotropic volume expansion and contraction of the electrode assembly, which has the advantage of not impeding ion migration due to the attachment of the tape, thereby resulting in minimal or no capacity loss of the battery.

In one example, the monomer having the polar functional group may be represented by Chemical Formula 1 below.

[Chemical Formula 1]

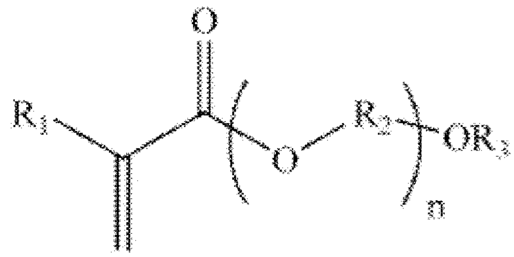

In Chemical Formula 1, $R_1$ represents hydrogen or an alkyl group having 1 to 12 carbon atoms,
$R_2$ represents an alkylene group having 1 to 6 carbon atoms,
$R_3$ represents hydrogen, an alkyl group having 1 to 12 carbon atoms, an aryl group having 6 to 24 carbon atoms, or an arylalkyl group having 6 to 48 carbon atoms, where
n is 0 or greater.

In Chemical Formula 1, $R_1$ is hydrogen, or an alkyl group having 1 to 12, 1 to 8, or 1 to 4 carbon atoms, and may be, for example, hydrogen, a methyl group, an ethyl group, a propyl group, a butyl group, a pentyl group, a hexyl group, and the like, and preferably hydrogen or a methyl group. However, the present application is not limited thereto.

In addition, in Chemical Formula 1, $R_2$ is an alkylene group having 1 to 6, 1 to 4, or 1 to 2 carbon atoms, and may be, for example, ethylene or propylene. However, the present application is not limited thereto.

$R_3$ represents hydrogen, an alkyl group having 1 to 12, 1 to 8, 1 to 6, or 1 to 4 carbon atoms; an aryl group having 6 to 24, 6 to 20, 6 to 18, or 6 to 12 carbon atoms; or an arylalkyl group having 6 to 48, 6 to 30, 6 to 24, or 6 to 18 carbon atoms, and may be, for example, hydrogen, a methyl group, an ethyl group, a propyl group, a phenyl group, a naphthyl group, a butylphenol group, a pentylphenol group, a hexylphenol group, a heptylphenol group, an octylphenol group, a nonylphenol group, or the like. However, the present application is not limited thereto.

In addition, n may be 0 or greater, for example, 1 or greater, preferably 2 or greater.

In one example, the monomer represented by Chemical Formula 1 may be a monomer represented by Chemical Formula 2 below.

[Chemical Formula 2]

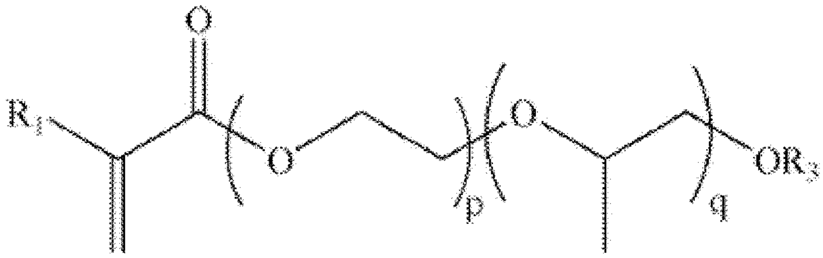

In Chemical Formula 2, $R_1$ and $R_3$ are defined as described above,
p+q is 1 or greater,
p is 0 to 100, and q is 0 to 100.

Examples of the monomer represented by Chemical Formula 1 or Chemical Formula 2 may include, but are not particularly limited to, methoxyethyl (meth)acrylate, methoxyethoxyethyl (meth)acrylate, ethoxyethoxyethyl (meth)acrylate, ethoxytriethyleneglycol (meth)acrylate, polyethyleneglycol (meth)acrylate, polyethyleneglycolmethylether (meth)acrylate, ethoxylated nonylphenol (meth)acrylate, propoxylated nonylphenol (meth)acrylate, ethoxylated phenol (meth)acrylate, and polypropyleneglycol (meth)acrylate, and preferably, methoxyethyl (meth)acrylate, methoxyethoxyethyl (meth)acrylate, ethoxyethoxyethyl (meth)acrylate, ethoxytriethyleneglycol (meth)acrylate, polyethyleneglycol (meth)acrylate, or polyethyleneglycolmethylether (meth)acrylate.

Since the monomer represented by Chemical Formula 1 or Chemical Formula 2 includes at least one oxygen atom and exhibits very high polarity due to the high electronegativity of the oxygen atom, the adhesive layer including the monomer may have a high affinity with a polar electrolyte solution, and may expand when in contact with the electrolyte. Note that the term "electrolyte solution" in the above may refer to, for example, a medium for ion conduction used in a secondary battery or the like. In one example, the electrolyte may be an electrolyte solution that is a liquid medium, but is not limited thereto. In the present specification, the electrolyte solution is also expressed as an electrolyte.

The polymer may include a monomer represented by Chemical Formula 1 in a polymerized form in an amount of 30 to 300 parts by weight, for example, 40 to 280 parts by weight or 44 to 250 parts by weight with respect to 100 parts by weight of a (meth)acrylic acid ester monomer, but the present application is not limited thereto. In addition, the monomer represented by Chemical Formula 1 may be included in an amount of 25 to 80 parts by weight, for example, 25 to 75 parts by weight or 30 to 70 parts by weight with respect to 100 parts by weight of the total monomer included as a polymerization unit in the polymer. If the monomer represented by Chemical Formula 1 is not included in a sufficient part by weight, it is difficult for the adhesive layer to expand sufficiently to be detached from the electrode assembly when in contact with the electrolyte, and if the monomer represented by Chemical Formula 1 is overly included in an insufficient part by weight, due to excessive gelation occurring in a polymerization reaction of the polymer, it may be difficult to realize adhesiveness of the adhesive. Therefore, in consideration of these points, a content of the monomer having the polar functional group may be controlled to be within the above-described ranges. In the present specification, "parts by weight" refers to a relative "weight ratio," unless particularly defined otherwise.

The crosslinkable monomer having a crosslinkable functional group is a monomer that can be copolymerized with the (meth)acrylic acid ester monomer or another monomer included in the polymer, and can provide a main chain of the polymer after copolymerization with a crosslinking point capable of reacting with a multifunctional crosslinking agent. In the above, the crosslinkable functional group may be a hydroxyl group, a carboxyl group, an isocyanate group, a glycidyl group, an amide group or the like, and in some cases, may be a photocrosslinkable functional group such as an acryloyl group or a methacryloyl group. The photocrosslinkable functional group may be introduced by reacting a compound having a photocrosslinkable functional group with the crosslinkable functional group provided by the copolymerizable monomer. The crosslinkable monomer containing the hydroxyl group may be, but is not limited to, for example, a monomer including a hydroxyl group such as hydroxyethyl (meth)acrylate, hydroxypropyl (meth)acrylate, hydroxybutyl (meth)acrylate, hydroxyhexyl (meth)acrylate, hydroxyoctyl (meth)acrylate, hydroxyethyleneglycol (meth)acrylate, glycerol (meth)acrylate, or hydroxypropyleneglycol (meth)acrylate, or a monomer in which at least one thereof is mixed. The carboxyl group-containing monomer may be, but is not limited to, for example, (meth)acrylic acid, carboxyethyl (meth)acrylate, carboxypentyl (meth)acrylate, itaconic acid, maleic acid, fumaric acid, or crotonic acid. In addition, the crosslinkable monomer including a glycidyl group may be, but is not limited to, for example, an epoxycycloalkylalkyl (meth)acrylate such as glycidyl (meth)acrylate, epoxyalkyl (meth)acrylate, or epoxycyclohexylmethyl (meth)acrylate. The crosslinkable monomer including an isocyanate group may be, but is not limited to, for example, 2-isocyanatoethyl (meth)acrylate,

1,1-bis(acryloyloxymethyl)ethyl isocyanate, (meth)acryloyloxy ethyl isocyanate, meth-isopropenyl-$\alpha,\alpha$-dimethylbenzyl isocyanate, methacryloyl isocyanate, or allyl isocyanate; an acryloyl monoisocyanate compound obtained by reacting a diisocyanate compound or a polyisocyanate compound with 2-hydroxyethyl (meth)acrylate; or an acryloyl monoisocyanate compound obtained by reacting a diisocyanate compound or a polyisocyanate compound with a polyol compound and 2-hydroxyethyl (meth)acrylate. The amide group-containing monomer may be, but is not limited to, for example, (meth)acrylamide, diethylacrylamide, N-vinylpyrrolidone, N,N-dimethyl(meth)acrylamide, N,N-diethyl(meth)acrylamide, N,N'-methylenebisacrylamide, N,N-dimethylaminopropylacrylamide, N,N-dimethylaminopropylmethacrylamide, or diacetone(meth)acrylamide. In addition, the amino group-containing monomer may be, but is not limited to, for example, aminoethyl(meth)acrylate, N,N-dimethylaminoethyl(meth)acrylate, or N,N-dimethylaminopropyl(meth)acrylate. The alkoxysilyl group-containing monomer may be, but is not limited to, trimethoxysilylpropyl (meth)acrylate or allyloxyethyl (meth)acrylate.

The polymer may include a crosslinkable monomer in a polymerized form in an amount of 0.1 to 10 parts by weight, for example, 2.5 to 10 parts by weight, 2.9 to 9 parts by weight, or 2.9 to 8 parts by weight with respect to 100 parts by weight of a (meth)acrylic acid ester monomer, but the present application is not limited thereto. In addition, the crosslinkable monomer may be included in an amount of 0.1 to 5 parts by weight, for example, 0.5 to 3 parts by weight or 1 to 2 parts by weight with respect to 100 parts by weight of the total monomer included as a polymerization unit in the polymer. If the crosslinkable monomer is overly included in an insufficient part by weight, due to an excessively low peeling force, it may be difficult for the adhesive layer to fix the electrode assembly, and if the crosslinkable monomer is included in an insufficient part by weight, it is difficult for the adhesive layer to expand sufficiently to be detached from the electrode assembly when in contact with an electrolyte. Therefore, in consideration of these points, a content of the crosslinkable monomer may be controlled to be within the above-described range.

The polymer may further include another functional comonomer as needed in a polymerized form, and for example, may be a monomer represented by Chemical Formula 3 below.

[Chemical Formula 3]

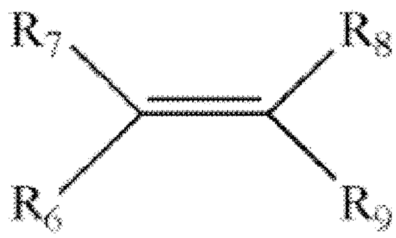

In Chemical Formula 3, $R_6$ to $R_8$ each independently represent hydrogen or an alkyl group, $R_9$ represents a cyano; phenyl unsubstituted or substituted with an alkyl; acetyloxy; or $COR_{10}$, and $R_{10}$ represents an amino or glycidyloxy unsubstituted or substituted with alkyl or alkoxyalkyl.

In the definitions of $R_6$ to $R_{10}$ in Chemical Formula 3, alkyl or alkoxy each independently refers to alkyl or alkoxy having 1 to 8 carbon atoms, and preferably, methyl, ethyl, methoxy, ethoxy, propoxy or butoxy.

A specific example of the monomer of Chemical Formula 3 may be, but is not limited to, a nitrogen-containing monomer such as (meth)acrylamide, N-butoxy methyl (meth)acrylamide, N-methyl (meth)acrylamide, (meth)acrylonitrile, N-vinyl pyrrolidone, or N-vinylcaprolactam; a styrene-based monomer such as styrene or methyl styrene; glycidyl (meth)acrylate; caprolactone; or vinyl ester of carboxylic acid such as vinyl acetate.

The polymer may be included in the composition in a form crosslinked by a multifunctional crosslinking agent. When the polymer is included in a crosslinked form, the adhesive layer formed of the composition may have a characteristic that it expands or swells when in contact with the electrolyte, and thus, disconnection of an electrode may be prevented. In addition, as the polymer is included in a crosslinked form, the adhesive layer formed of the adhesive composition may ensure a suitable cohesive force.

A type of multifunctional crosslinking agent for crosslinking the polymer is not particularly limited. For example, among known crosslinking agents such as an isocyanate crosslinking agent, an epoxy crosslinking agent, an aziridine crosslinking agent, a metal chelate crosslinking agent or a photocrosslinking agent, an appropriate crosslinking agent may be selected according to a type of a crosslinkable functional group present in the polymer. Examples of the isocyanate crosslinking agent may include diisocyanate such as tolylene diisocyanate, xylene diisocyanate, diphenylmethane diisocyanate, hexamethylene diisocyanate, isophorone diisocyanate, tetramethylxylene diisocyanate or naphthalene diisocyanate, a reactant of the diisocyanate and polyol, and the like, and trimethylol propane and the like may be used as the polyol. As the epoxy crosslinking agent, ethylene glycol diglycidyl ether, triglycidyl ether, trimethylolpropane triglycidyl ether, N, N, N', N'-tetraglycidyl ethylenediamine, glycerin diglycidyl ether or the like may be used. Examples of the

aziridine crosslinking agent may include N,N'-toluene-2,4-bis(1-aziridinecarboxamide), N,N'-diphenylmethane-4,4'-bis(1- aziridine carboxamide), triethylene melamine, bisisoprotaloyl-1-(2-methylaziridine), or tri-1-aziridinylphosphine oxide, and the like. Examples of the metal chelate crosslinking agent may include a compound in which polyvalent metal is coordinated with a compound such as acetylacetone or ethyl acetoacetate, and examples of the polyvalent metal may include aluminum, iron, zinc, tin, titanium, antimony, magnesium, vanadium or the like. As the photocrosslinking agent, multifunctional acrylate or the like may be used. Considering the type of crosslinkable functional group included in the polymer, one or two or more crosslinking agents may be used.

A weight ratio of the multifunctional crosslinking agent in the adhesive composition may be controlled to be within in a range in which a desired peeling force or a gel fraction described below may be ensured, for example. For example, the crosslinking agent may be included in an amount of 0.001 to 10 parts by weight, for example, 0.1 to 5 parts by weight or 0.5 to 4 parts by weight with respect to 100 parts by weight of the total composition, but the present application is not limited thereto. If the ratio of the multifunctional crosslinking agent is too low, the cohesive force of the adhesive layer may not be suitably ensured, and if the ratio of the multifunctional crosslinking agent is too high, an adhesive property may be degraded. Accordingly, a suitable range of the ratio may be selected in consideration of these points.

The polymer included in the adhesive composition may be manufactured by applying a mixture of the monomers as described above to a polymerization process such as solution polymerization, photo polymerization, bulk polymerization, suspension polymerization, or emulsion polymerization.

The polymer may have a weight average molecular weight (Mw) of approximately 300,000 to 2,500,000, 400,000 to 2,000,000, 400,000 to 1,500,000, 400,000 to 1,000,000, 500,000 to 2,000,000, 800,000 to 1,800,000, 600,000 to 1,200,000, 700,000 to 1,400,000, or 600,000 to 800,000. In the present specification, the weight average molecular weight may refer to a conversion value for standard polystyrene measured by gel permeation chromatography (GPC), and unless particularly defined otherwise, a molecular weight may refer to the weight average molecular weight. If the molecular weight of the polymer is too low, the cohesive force of the adhesive layer may be degraded, and if the molecular weight of the polymer is too high, the adhesive property may be degraded. Therefore, a suitable molecular weight may be selected in consideration of these points.

The adhesive composition may further include various additives known in the art as needed, in addition to the above-described components. For example, the adhesive composition may further include a tackifier. The tackifier may be, but is not limited to, for example, a rosin ester-based or styrene-based tackifier, and as needed, a suitable type may be selected and used. A content of the tackifier is not particularly limited, and may be controlled, in consideration of peeling force with the electrode assembly, and the like. In one example, the tackifier may be used in an amount of 1 to 25 parts by weight with respect to 100 parts by weight of the polymer.

The adhesive composition may further include an additive such as an initiator including a thermal initiator or a photoinitiator; an epoxy resin; a curing agent; a UV stabilizer; an antioxidant; a coloring agent; a reinforcing agent; a filler; a foaming agent; a surfactant; a photopolymerizable compound such as a multifunctional acrylate; or a plasticizer within a range that does not have an effect on a desired effect.

In one example, the polymer included in the adhesive composition may be manufactured through photopolymerization by selecting a suitable photoinitiator generally well known in the art. The photoinitiator may be applied to the photopolymerization by, but is not limited to, for example, an organic peroxide such as benzoylperoxide, 1,1-bis(tertbutylperoxy)-3,3,5-triethylcyclohexane, tertbutylperoxyacetate, tertbutylperoxybenzoate, tertbutyl peroxy-2-ethylhexanoate, tertbutyl peroxyisopropylcarbonate, di-2-ethylhexylperoxy dicarbonate, diisopropylperoxy dicarbonate, di-3-methoxybutylperoxy dicarbonate, di-3,3,5-trimethylhexanoyl peroxide, di-tert-butyl peroxide, lauroyl peroxide, dicumylperoxide, or methyletherketoneperoxide; a hydroperoxide such as butyl hydroperoxide or cumyl hydroperoxide; an oxidant such as hydrogen peroxide, ammonium peroxodisulfide, nitric acid and a salt thereof, perchloric acid and a salt thereof, sulfuric acid and a salt thereof, hypochlorous acid and a salt thereof, permanganic acid and a salt thereof, chromic acid and a salt thereof, lead dioxide, manganese dioxide, copper oxide, iron chloride, fluorine, chlorine, bromine, or iodine; a reductant such as sodiumborohydride, formaldehyde, acetaldehyde, amine, or hydrazine; an azo compound such as azobisisobutyronitrile (AIBN); a means for radiating heat, light, a UV ray, or a high energy wavelength; or electron transfer in an electrolyte.

A content of the photoinitiator may be, but is not particularly limited to, 0.01 to 5 parts by weight, for example, 0.01 to 1 part by weight or 0.01 to 0.5 part by weight with respect to 100 parts by weight of the total monomer mixture.

The adhesive layer 11 as described above may be formed, for example, by coating the porous support 12 with a coating solution in which the polymer and the multifunctional crosslinking agent as described above are mixed, and inducing a crosslinking reaction between the polymer and the multifunctional crosslinking agent under appropriate conditions.

A thickness of the adhesive layer 11 may be appropriately selected in accordance with a use to be applied, for example, a desired peeling force, and the like, and is not particularly limited. The adhesive layer 11 may be formed to have a thickness of, for example, approximately or 2 um to 100 um, 3 um to 50 um, 4 um to 25 μm, 2 μm to 15 μm, 4 um to 10 um, 4 um to 9 um, 4 um to 7 um, 5 um to 9 um, or 5 um to 7 um, which may, however, vary depending on the use.

The adhesive tape 10 may be an adhesive tape 10 attached to the inside 1c of an electrode assembly in a secondary battery. In addition, the adhesive tape 10 according to the exemplary embodiments of the present application includes the adhesive layer 11 that does not have an excessively high initial peeling force and includes the above-described monomer having a polar functional group. Therefore, when the adhesive tape 10 is in contact with an electrolyte solution in the secondary battery, the adhesive layer 11 absorbs the electrolyte solution and expands, and thus, the peeling force of the adhesive layer 11 may be controlled to be low to such an extent that the adhesive layer is to be detached from the electrode assembly.

In one example, the adhesive tape 10 of the present application may have an initial peeling force sufficient to fix the electrode assembly and to be detached from the electrode assembly when in contact with an electrolyte. If the initial peeling force of the electrode assembly is too high, it may be difficult for the adhesive layer 11 to be detached from the electrode assembly 22 even after a contact with the electrolyte. For example, the adhesive layer 11 may have a peeling force of 370 gf/25 mm or less, for example, 350 gf/25 mm or less, 315 gf/25 mm or less, or 312 gf/25 mm or less at room temperature measured at a peeling rate of 5 mm/sec and a peeling angle of 180 degrees, with respect to glass. The lower limit value of the peeling force of the adhesive layer 11 with respect to glass is not particularly limited, and for example, when the adhesive layer has a very low initial peeling force, the adhesive layer loses an adhesive force when in contact with the electrolyte solution, and accordingly, the adhesive tape is detached from the electrode assembly, and thus, disconnection of the electrode may be prevented. However, if the initial peeling force of the adhesive layer 11 is too low, the electrode assembly may unwind without a contact with the electrolyte solution before the electrode assembly is positioned in a can. In consideration of this point, the lower limit value of the peeling force of the adhesive layer 11 with respect to glass may be controlled to be 5 gf/25 mm or higher, for example, 10 gf/25 mm or higher, 20 gf/25 mm or higher, 30 gf/25 mm or higher, 40 gf/25 mm or higher, 50 gf/25 mm or higher, 60 gf/25 mm or higher, 70 gf/25 mm or higher, 80 gf/25 mm or higher, 85 gf/25 mm or higher, or 88 gf/25 mm or higher. When the adhesive layer 11 has a peeling force within the above range with respect to glass, even when the adhesive layer 11 is attached to the inside 1c of the electrode assembly 1, the adhesive layer may have an appropriate initial peeling force by which the adhesive layer is detached when in contact with the electrolyte solution, and form a stereoscopic structure having a specific surface roughness when the adhesive tape 10 is in contact with the electrolyte solution.

In addition, the adhesive tape 10 of the present application forms a stereoscopic structure as the adhesive layer 11 absorbs an electrolyte solution and expands when in contact with the electrolyte solution, and the peeling force of the adhesive layer 11 may be controlled to be low enough to be detached from the electrode assembly, and accordingly, the adhesive layer 11 may be detached from the attachment surface of the inside 1c of the electrode assembly. In one example, the adhesive tape 10 may be detached from the attachment surface of the electrode assembly after a contact with the electrolyte solution, and preferably, 50% or more, for example, 60% or more, 70% or more or 80% or more of an area in which the adhesive tape 10 is attached to the inside 1c of the electrode assembly may be detached.

A thickness of the adhesive tape 10 may be appropriately selected depending on a desired peeling force and the like, and is not particularly limited. The adhesive tape 10 may be formed to have a thickness of, for example, approximately 10 um to 100 um, 15 um to 75 um, 20 um to 45 um, 15 um to 40 um, 20 um to 40 um, or 20 um to 30 um, which may, however, vary depending on the use. If the thickness of the adhesive tape 10 is too small, an effect resulting from the expansion of the adhesive layer 11 of the adhesive tape 10 may be difficult to be exhibited, and on the contrary, if the thickness of the adhesive tape 10 is too large, the thickness of the electrode assembly is also increased, which may cause great damage to the electrode assembly due to degraded processability when inserting the electrode assembly into a battery case, or may cause a reduction in capacity compared to other batteries having the same specification.

The adhesive tape 10 may further include a release sheet attached to the adhesive layer 11 in order to protect the adhesive layer 11 before the tape is used.

Another exemplary embodiment of the present specification provides a secondary battery including the electrode assembly described above; and a battery case for accommodating the electrode assembly. In this case, the secondary battery is determined in accordance with a form of winding the electrode assembly, a shape of the battery case, and a method of sealing the wound electrode assembly, and in consideration of these points, the secondary battery can be implemented in various forms. For example, the secondary battery may be a cylindrical secondary battery, a prismatic secondary battery, or a pouch-shaped secondary battery.

In another exemplary embodiment of the present specification, the electrode assembly may be of a roll type in which a vertical cross-section of a winding core axis is circular.

A type of a can 21 in which the electrode assembly 22 is stored is not particularly limited, and for example, a cylindrical can 21 may be exemplified as a known type in the art.

The secondary battery 20 may be manufactured by, for example, a method of attaching the adhesive tape 10 to the electrode assembly 22, storing the electrode assembly into the can 21, injecting an electrolyte into the can 21, and sealing the can 21.

In the above, a type of electrolyte solution, which is a fluid for deforming, for example, expanding the adhesive layer 11 of the adhesive tape 10, is not particularly limited, and an electrolyte solution known in the art is used depending

on a type of a battery. For example, when the battery is a lithium secondary battery, the electrolyte may include, for example, a non-aqueous organic solvent and a lithium salt. In the above, the lithium salt is dissolved in the organic solvent to serve as a source of lithium ions in the battery, and may promote migration of lithium ions between the positive electrode and the negative electrode. The lithium salt may include, for example, one or two or more of $LiPF_6$, $LiBF_4$, $LiSbF_6$, $LiAsF_6$, $LiCF_3SO_3$, $LiN(CF_3SO_2)_3$, $Li(CF_3SO_2)_2N$, $LiC_4F_9SO_3$, $LiClO_4$, $LiAlO_4$, $LiAlCl_4$, $LiN(C_xF_{2x}+1SO_2)(C_yF2_y+1SO_2)$ (where x and y are natural numbers), LiCl, LiI, and lithium bisoxalate borate as a supporting electrolyte salt. A concentration of the lithium salt in the electrolyte may vary depending on the use, and may be typically within a range of 0.1 M to 2.0 M. In addition, the organic solvent may serve as a medium in which ions involved in an electrochemical reaction of the battery can migrate, and may be, but is not limited to, for example, one or two or more of benzene, toluene, fluorobenzene, 1,2-difluorobenzene, 1,3 - difluorobenzene, 1,4-difluorobenzene, 1,2,3-trifluorobenzene, 1,2,4-trifluorobenzene, chlorobenzene, 1,2-dichlorobenzene, 1,3 -dichlorobenzene, 1,4-dichlorobenzene, 1,2,3-trichlorobenzene, 1,2,4-trichlorobenzene, iodobenzene, 1,2-diiodobenzene, 1,3 - diiodobenzene, 1,4-diiodobenzene, 1,2,3-triiodobenzene, 1,2,4-triiodobenzene, fluorotoluene, 1,2-difluorotoluene, 1,3-difluorotoluene, 1,4-difluorotoluene, 1,2,3-trifluorotoluene, 1,2,4-trifluorotoluene, chlorotoluene, 1,2-dichlorotoluene, 1,3-dichlorotoluene, 1,4-dichlorotoluene, 1,2,3-trichlorotoluene, 1,2,4-trichlorotoluene, iodotoluene, 1,2-diiodotoluene, 1,3 - diiodotoluene, 1,4-diiodotoluene, 1,2,3-triiodotoluene, 1,2,4-triiodotoluene, R-CN (where R is a linear, branched or cyclic hydrocarbon group having 2 to 50 carbon atoms, and the hydrocarbon group may include a double bond, an aromatic ring or an ether bond), dimethylformamide, dimethylacetate, xylene, cyclohexane, tetrahydrofuran, 2-methyltetrahydrofuran, cyclohexanone, ethanol, isopropyl alcohol, dimethyl carbonate, ethylmethyl carbonate, diethyl carbonate, methylpropyl carbonate, propylene carbonate, methyl propionate, ethyl propionate, methyl acetate, ethyl acetate, propyl acetate, dimethoxyethane, 1,3-dioxolane, diglyme, tetraglyme, ethylene carbonate, propylene carbonate, dimethyl carbonate, $\gamma$-butyrolactone, sulfolane, valerolactone, decanolide, and mevalolactone.

In an exemplary embodiment of the present specification, the secondary battery may be a cylindrical secondary battery whose form factor ratio (defined as a value obtained by dividing a diameter of the cylindrical battery by a height, i.e., a ratio of a diameter ($\Phi$) to a height (H)) is greater than 0.4. Here, the form factor refers to a value indicating a diameter and a height of a cylindrical secondary battery.

In the related art, batteries with a form factor ratio of approximately 0.4 or less have been used. That is, in the related art, for example, an 18650 cell, a 21700 cell, and the like have been used. For an 18650 cell, a diameter is approximately 18 mm, a height is approximately 65 mm, and a form factor ratio is approximately 0.277. For a 21700 cell, a diameter is approximately 21 mm, a height is approximately 70 mm, and a form factor ratio is approximately 0.300.

A cylindrical secondary battery according to an exemplary embodiment of the present specification may be a 46110 cell, a 48750 cell, a 48110 cell, a 48800 cell, or a 46800 cell. In the numerical value representing the form factor, first two numbers indicate a diameter of a cell, next two numbers indicate a height of the cell, and the last number 0 indicates that a cross section of the cell is circular.

The secondary battery according to an exemplary embodiment of the present specification may be a cylindrical secondary battery having a cylindrical shape whose diameter is 46 mm, height is 110 mm, and form factor ratio is 0.418.

The secondary battery according to an exemplary embodiment of the present specification may be a cylindrical secondary battery having a cylindrical shape whose diameter is 48 mm, height is 75 mm, and form factor ratio is 0.640.

The secondary battery according to an exemplary embodiment of the present specification may be a cylindrical secondary battery having a cylindrical shape whose diameter is 48 mm, height is 110 mm, and form factor ratio is 0.436.

The secondary battery according to an exemplary embodiment of the present specification may be a cylindrical secondary battery having a cylindrical shape whose diameter is 48 mm, height is 80 mm, and form factor ratio is 0.600.

The secondary battery according to an exemplary embodiment of the present specification may be a cylindrical secondary battery having a cylindrical shape whose diameter is 46 mm, height is 80 mm, and form factor ratio is 0.575.

Another exemplary embodiment of the present specification provides a secondary battery including the electrode assembly 1 described above and a battery case for accommodating the electrode assembly 1.

FIG. 11 illustrates a secondary battery 20 positioned in a battery case in which a wound electrode assembly 1 is also positioned. The electrode assembly 1 has a circular vertical cross-section of the winding core axis, and the battery case may be cylindrical. The battery case may include a can 21 and a cap assembly 22.

The can 21 may have a column structure with a space formed therein. The can 21 may accommodate the electrode assembly 1 including electrodes and a separator and an electrolyte solution (not shown) in the internal space. The can 21 may have a structure in which one side is opened and the other side is sealed. Here, one side and the other side of the can 21 refer to end portions located at the top and bottom along a direction of gravity or a center axis of the can 21.

The can 21 may be made of a lightweight conductive metal material such as aluminum or aluminum alloy.

The cap assembly 22 may be coupled to the top of the can 21 and may include a top cap, a safety vent, and a current interrupt device.

The top cap protrudes from the top of the cap assembly 22 and may serve as an electrode terminal to be electrically connected to the outside. The safety vent can discharge high-pressure gas when gas is generated inside

beyond a certain level due to an increase in internal pressure, and the current interrupt device can interrupt a current when the internal pressure of the battery increases.

The top cap may be coupled to the top of the can 21. That is, the top cap may be coupled to a crimping portion located at the top of the can 21.

The secondary battery 20 according to the present invention may include a gasket between the crimping portion and the top cap. The gasket can increase a sealing force of the case.

The top cap may include a protrusion that protrudes upward in the direction of gravity, an edge portion coupled to the gasket, and a connection portion connecting the protrusion and the edge portion.

The safety vent may be located under the top cap and coupled to a distal end portion of the top cap. The safety vent may be in contact with the distal end portion of the top cap over a certain length, and a portion excluding the contact length may be located at a certain distance from the top cap.

The safety vent may be provided while being bent at least once. For example, the safety vent may be provided with two notches at a portion that is not in contact with the top cap. That is, the safety vent 12 may be bent by the notches, and the center of the safety vent may be depressed to form a recessed central portion. The safety vent may be formed with a venting portion connecting the distal end portion in contact with the top cap and the recessed central portion.

The current interrupt device may be located under the safety vent and have at least a portion in contact with the safety vent.

The current interrupt device may include a central portion protruding in the direction of the safety vent and a CID filter unit located outside the central portion. Therefore, in the cap assembly 22, the central portion of the current interrupt device and the recessed central portion of the safety vent may be in contact with each other.

The cap assembly 22 according to the present invention may be provided with a CID gasket at a distal end portion of the CID filter unit. The CID gasket can prevent the safety vent from coming into contact with a portion other than the central portion of the current interrupt device.

Another exemplary embodiment of the present specification provides a battery pack including two or more secondary batteries described above. FIG. 12 is a view schematically showing a configuration of a battery pack according to an exemplary embodiment of the present invention.

Referring to FIG. 12, a battery pack 200 according to an exemplary embodiment of the present invention includes an assembly in which the secondary battery cells 201 are electrically connected, and a pack housing 202 for which the assembly can be positioned. The cylindrical secondary battery cell 201 is a battery cell according to the exemplary embodiment described above. In the drawing, for convenience of illustration, components such as a bus bar, a cooling unit and an external terminal for electrical connection of the cylindrical battery cells 201 are omitted.

Another exemplary embodiment of the present specification provides a transportation means including the battery pack 200 described above. The transportation means is anything that moves luggage, people, and the like, or works while moving, and may be bicycles, heavy equipment, agricultural equipment, vehicles, buses, airplanes, and the like.

The battery pack 200 may be mounted on a vehicle V. The vehicle may be, for example, an electric vehicle, a hybrid vehicle, or a plug-in hybrid vehicle. The vehicle V includes a four-wheeled vehicle or a two-wheeled vehicle. FIG. 13 is a view for illustrating a vehicle V including the battery pack 200 in FIG. 12.

Referring to FIG. 13, the vehicle V according to an exemplary embodiment of the present specification includes the battery pack 200 according to an exemplary embodiment of the present specification. The vehicle V operates by receiving electric power from the battery pack 200 according to an exemplary embodiment of the present invention.

Below, the present specification will be described in more detail through examples. However, the following examples are only for illustrating the present specification and are not intended to limit the present specification.

[Preparation Example 1]

Preparation of Polymers

A monomer mixture composed of 58 parts by weight of n-butyl acrylate (n-BA), 40 parts by weight of methoxy ethyl acrylate (MEA), and 2 parts by weight of hydroxybutyl acrylate (HBA), and 0.02 part by weight of n-dodecanethiol as a chain transfer agent were put into a 1000 cc reactor where a nitrogen gas was refluxed and a cooling device was equipped to easily control a temperature, and 150 parts by weight of ethyl acetate (EAc) as a solvent was added. Then, after purging with a nitrogen gas was performed at 60°C for 60 minutes in order to remove oxygen, the reactor temperature was maintained at 60°C. After the mixture was homogenized, 0.04 part by weight of azobisisobutyronitrile (AIBN) as a reaction initiator was added. The mixture was subjected to reaction for 8 hours to prepare a polymer having a weight average molecular weight of 800,000. In the above, part by weight refers to wt%.

Based on 100 parts by weight of the polymer prepared described above, 0.3 part by weight of tolylene diisocyanate adduct of trimethylolpropane as a multifunctional isocyanate-based crosslinking agent was put to an ethyl acetate

solution, which was then diluted to an appropriate concentration in consideration of coatability, and uniformly mixed to prepare an adhesive composition.

The adhesive composition was coated to a thickness of 3 um on one surface of the release film and dried. After transferring the adhesive composition to a porous support, a release film was removed to prepare an adhesive tape with a thickness of 19 μm, a length of 60 mm, and a width of 10 mm.

In this case, the porous support is a polyethylene (PE) porous support with a porosity of 47%, a thickness of 16 um, and a tensile strength of 2040 kgf/$cm^2$ in the mechanical direction (MD), and a tensile elongation of 125% in the MD direction.

[Experimental Example 1]

Preparation of Electrode Assembly and Battery

While stacking an electrode assembly including a negative electrode, a positive electrode, and a separator as shown in FIG. 15, the prepared adhesive tape was attached to an adhesive tape position in FIG. 15, and the stacked electrode assembly was wound to prepare a jelly-roll (J/R) type assembly with a cross-sectional diameter of 17.2 mm.

The jelly-roll type assembly was inserted into a cylindrical can (cross-sectional diameter: 17.5 mm). Subsequently, the carbonate-based electrolyte was injected into the can, which was then sealed to complete a battery of the Example.

On the other hand, a battery where adhesive tape was not attached in the battery of the Example was used as Comparative Example (Ref).

After charging and discharging the batteries of the Example and Comparative Example 20 and 50 times under the following conditions, deformation of the jelly roll was observed.

<Test Condition>

Temperature: 25°C
Charge: 4.25 V 1 C 50 mA cut, rest 10 min
Discharge: 1 C 2.5 V cut, rest 20 min

In order to check the deformation of the batteries after charging and discharging the batteries 20 and 50 times, two Examples (Test) and two Comparative examples (Ref) were prepared in the same manner, identified with #1 and #2, and subjected to CT imaging at 225 kV and frame rate of 3 fps with XSCAN-8225 equipment. The results are shown in FIG. 14.

As can be seen in FIG. 14, it was confirmed that in the batteries of Comparative Example (Ref), deformation occurred on the winding core side due to electrode expansion during charging and discharging, but in the batteries of the Example (Test) to which the adhesive tape was applied, the separator was physically reinforced by the adhesive tape, and accordingly, deformation was suppressed. In this case, deformation on the winding core side reduces battery performance by causing damage to the electrodes, and in severe cases, can even cause damage to the separator, causing an internal short-circuit. Therefore, it is important to reduce deformation.

[Experimental Example 2]

Confirmation of Lithium Metal Precipitation After Disassembling

In Experimental Example 1, the battery of the Example (Test) that was charged and discharged 50 times was disassembled in a fully charged state of 4.2V to observe whether lithium metal was precipitated, and a photograph confirming this is shown in FIG. 16.

Before charging, the negative electrode is black due to carbon, but after charging, when lithium metal is intercalated, the negative electrode turns yellow, and when lithium metal (Li metal) is precipitated, the negative electrode turns gray.

In the battery of the Example, the portion where the adhesive tape is attached is the negative electrode facing the positive electrode. If a general tape that cannot absorb the electrolyte solution and expand to form an ion migration path is attached, the migration of lithium ions is impeded, and precipitation of lithium metal is caused in the surrounding area. On the other hand, it was confirmed through FIG. 16 that the adhesive tape prepared in the preparation example formed an ion migration path through which ions could migrate, so no precipitation of lithium metal occurred.

Although the present invention has been described with reference to preferred embodiments, it will be understood by one skilled in the art that various modifications and variations can be made in the present invention without departing from the technical spirit and scope of the present invention.

## Claims

1. An electrode assembly comprises:

   a positive electrode;
   a negative electrode; and
   a separator positioned between the positive electrode and the negative electrode such that the positive electrode, separator, and negative electrode are stacked and wound,
   wherein the electrode assembly includes an adhesive tape positioned on an inside portion of the electrode assembly,
   wherein the adhesive tape includes a porous support and an adhesive layer provided on the porous support, the adhesive layer being configured to absorb an electrolyte solution and to expand to form an ion migration path after contacting an electrolyte solution.

2. The electrode assembly of claim 1, wherein the adhesive tape is positioned on at least one of a first position between the positive electrode and the separator, and a second position between the negative electrode and the separator.

3. The electrode assembly of claim 1, wherein the positive electrode and the negative electrode each comprise a current collector and an active material layer provided on at least one surface of the current collector,
   wherein the adhesive tape is positioned on at least one of a third position between an end portion of the active material layer of the positive electrode on an inner side and the separator, and a fourth position between an end portion of the active material layer of the negative electrode on an inner side and the separator.

4. The electrode assembly of claim 1, wherein the positive electrode includes a positive electrode current collector and a positive electrode active material layer provided on at least one surface of the positive electrode current collector, and
   wherein the adhesive tape is configured to cover an end portion of the positive electrode active material layer and a surface of the positive electrode current collector adjacent to the end portion of the positive electrode active material layer.

5. The electrode assembly of claim 1, wherein the positive electrode includes a positive electrode current collector and a positive electrode active material layer provided on at least one surface of the positive electrode current collector,

   wherein the positive electrode includes two or more coated portions spaced apart from each other in a winding direction of the electrode assembly and provided with the positive electrode active material layer on the positive electrode current collector; and an uncoated portion not provided with the positive electrode active material layer on the positive electrode current collector between the two or more coated portions, and
   wherein the adhesive tape is positioned to cover the uncoated portion and an end portion of the positive electrode active material layer on the uncoated portion side.

6. The electrode assembly of claim 1, wherein the positive electrode and the negative electrode each comprise a current collector and an active material layer provided on inner and outer surfaces of the current collector.

7. The electrode assembly of claim 6, wherein, in a winding direction of the electrode assembly, from an inner end portion of the separator, an inner end portion of the negative electrode active material layer is closer than an inner end portion of the positive electrode active material layer.

8. The electrode assembly of claim 7, wherein the negative electrode includes a coated portion provided with the active material layer on the current collector; and an uncoated portion not provided with the active material layer on either opposing end portion of the current collector in the winding direction of the electrode assembly, and
   wherein the adhesive tape is positioned on the uncoated portion of inner end portion of the negative electrode.

**9.** The electrode assembly of claim 8, wherein the adhesive tape is positioned on the uncoated portion of the inner end portion of the negative electrode that the inner end portion of the positive electrode active material layer faces .

**10.** The electrode assembly of claim 9, wherein the adhesive tape is provided on an inner surface of the uncoated portion of the inner end portion of the negative electrode that the inner end portion of the positive electrode active material layer faces.

**11.** The electrode assembly of claim 6, wherein the negative electrode includes a negative electrode tab formed on an inner end portion of the negative electrode current collector.

**12.** The electrode assembly of claim 1, wherein the adhesive layer includes an acrylate-based adhesive having an ethylene oxide side chain.

**13.** A secondary battery comprising the electrode assembly of any one of claims 1 to 12 and a battery case for receiving the electrode assembly.

**14.** The secondary battery of claim 13, wherein the electrode assembly has a cylindrical shape.

**15.** A battery pack comprising two or more secondary batteries of claim 13.

**16.** A transportation means comprising the battery pack of claim 15.

[Figure 1]

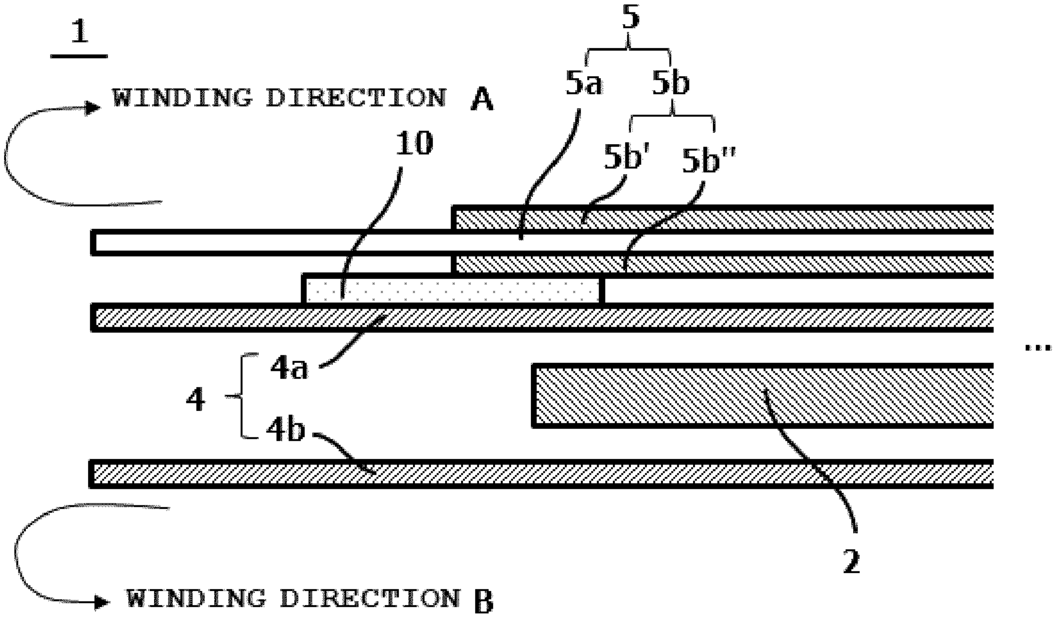


[Figure 2]

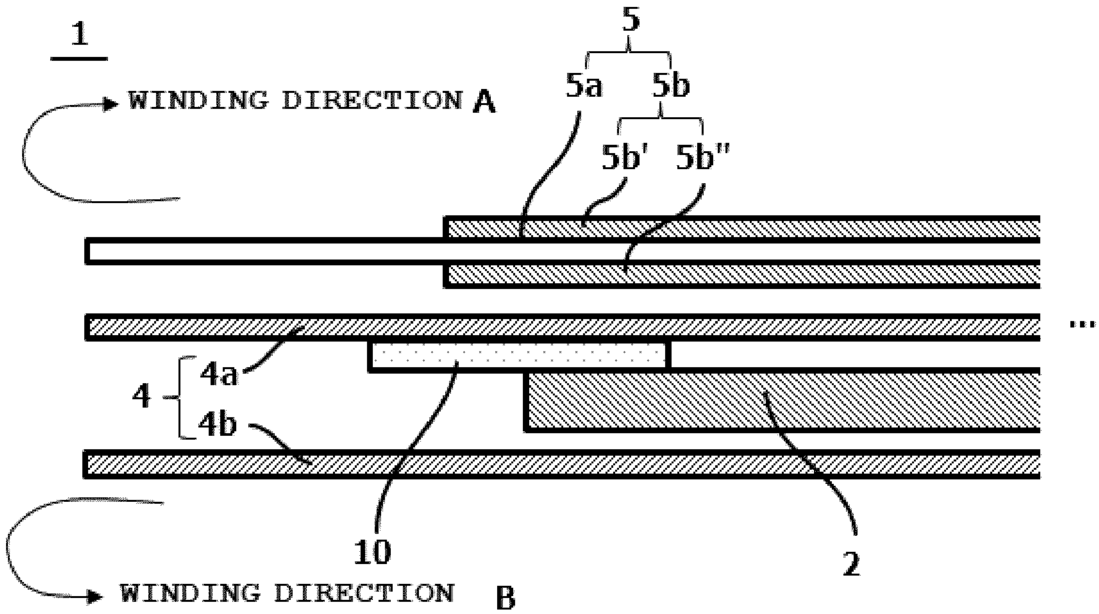

[Figure 3]

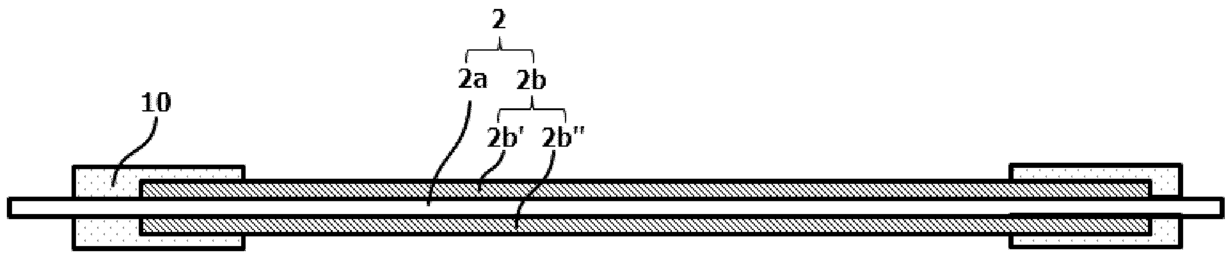


[Figure 4]

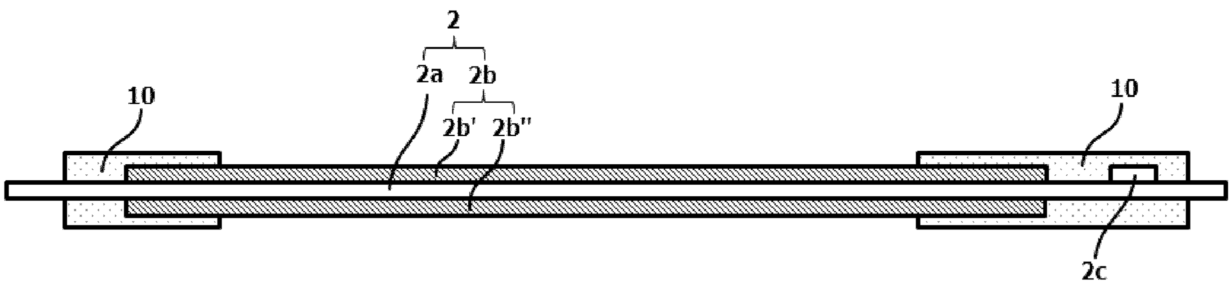


[Figure 5]

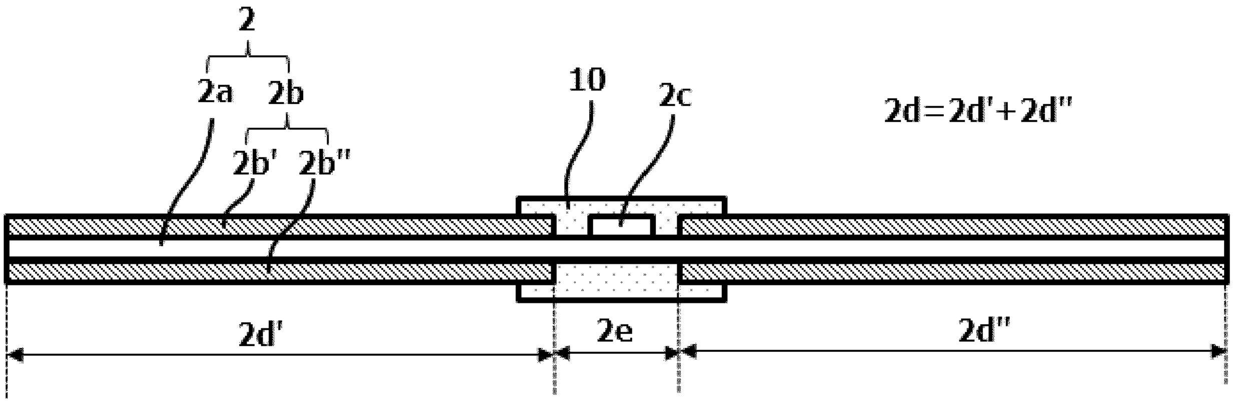

[Figure 6]

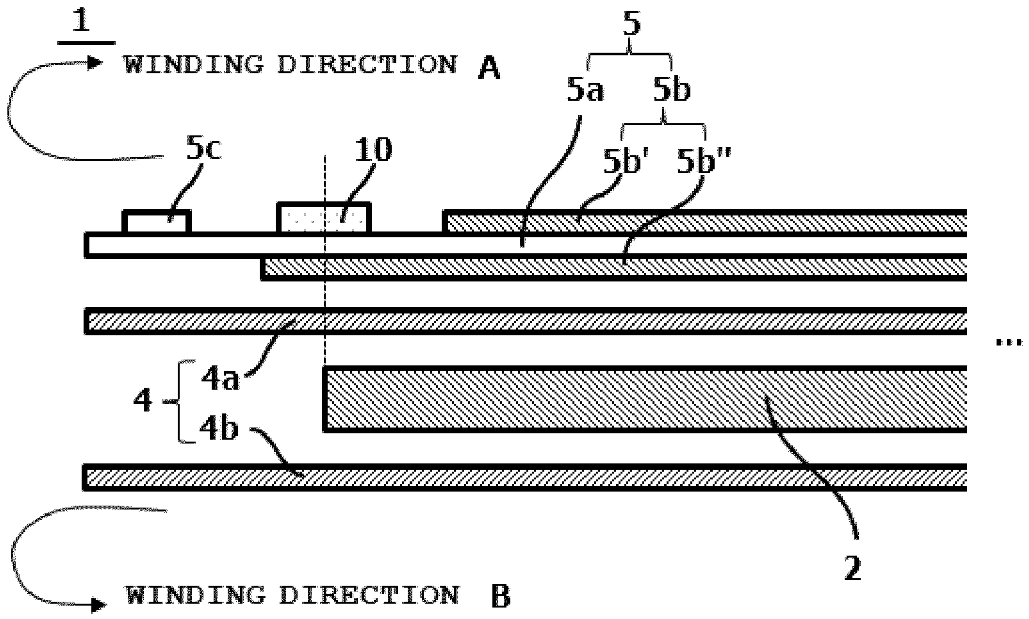


[Figure 7]

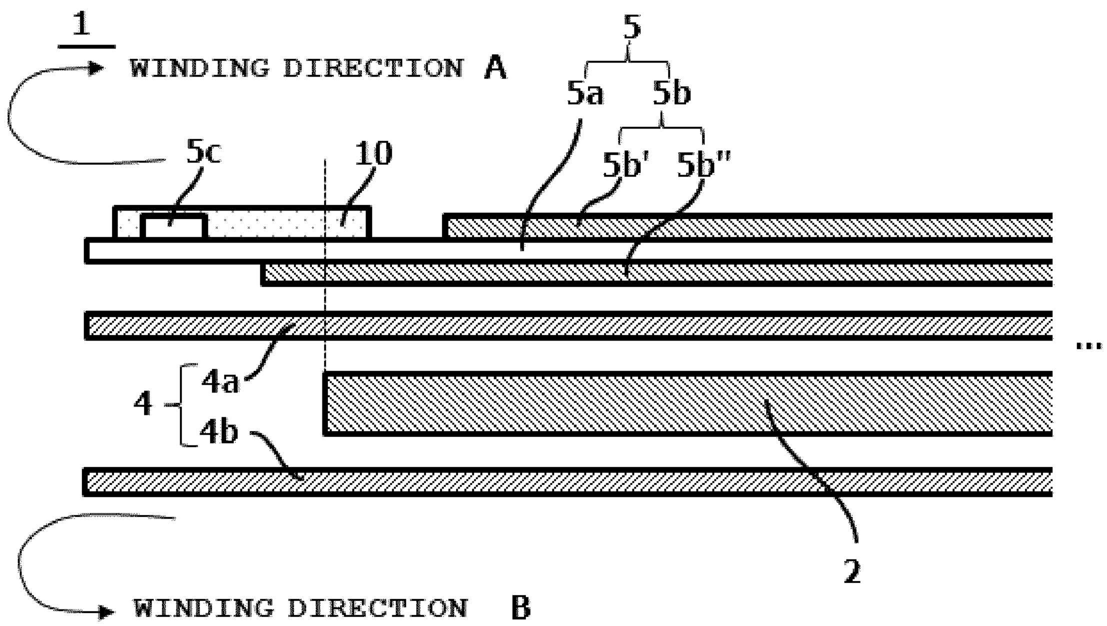

[Figure 8]

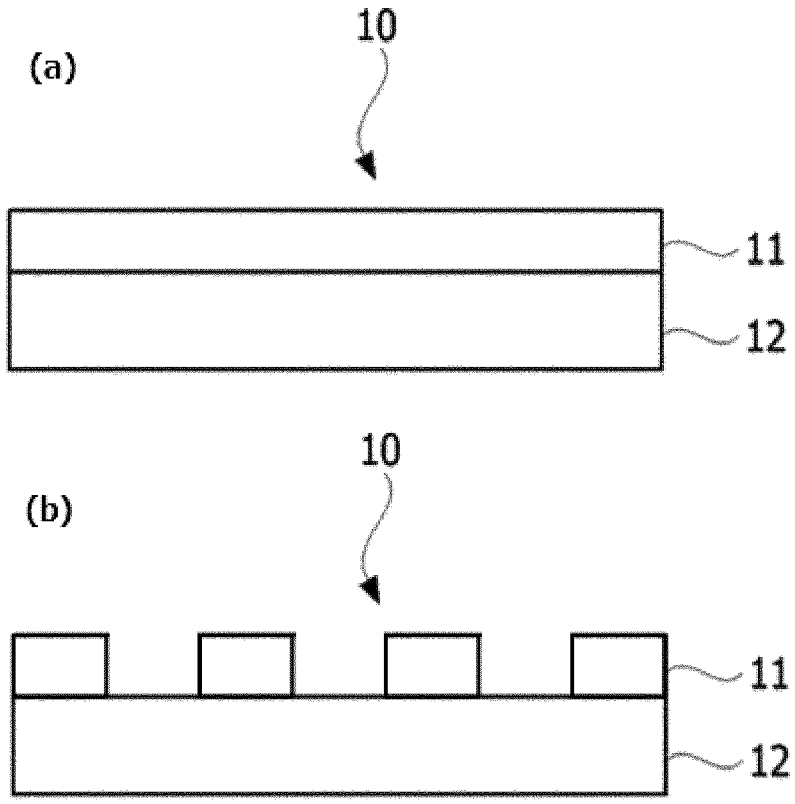

[Figure 9]

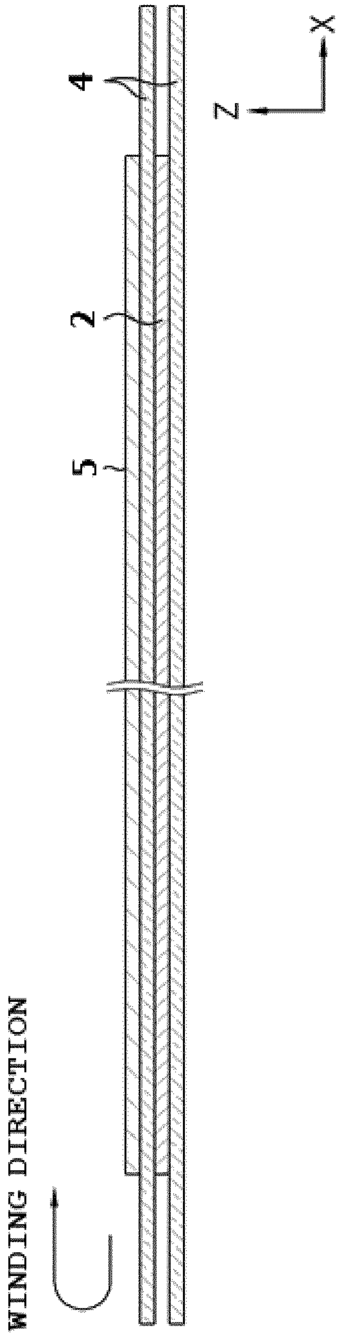

[Figure 10]

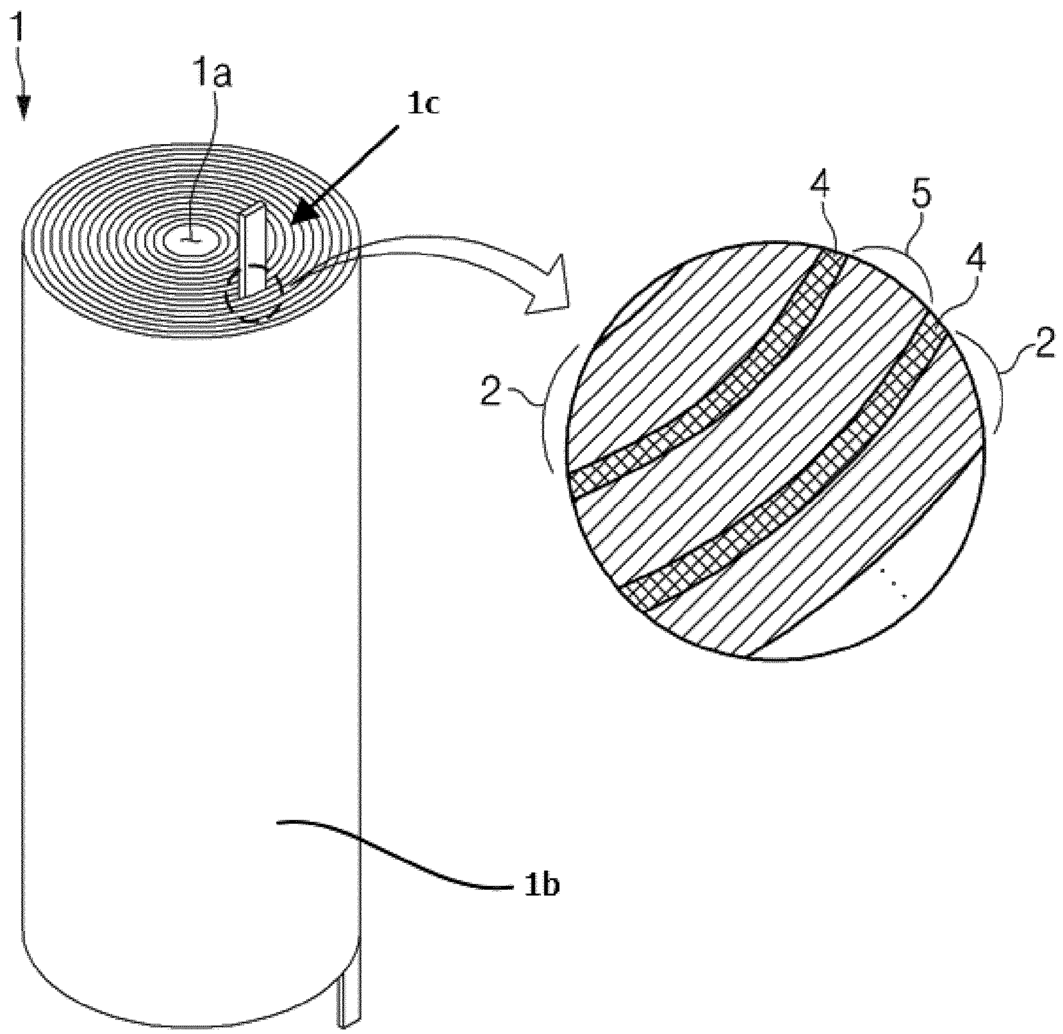

[Figure 11]

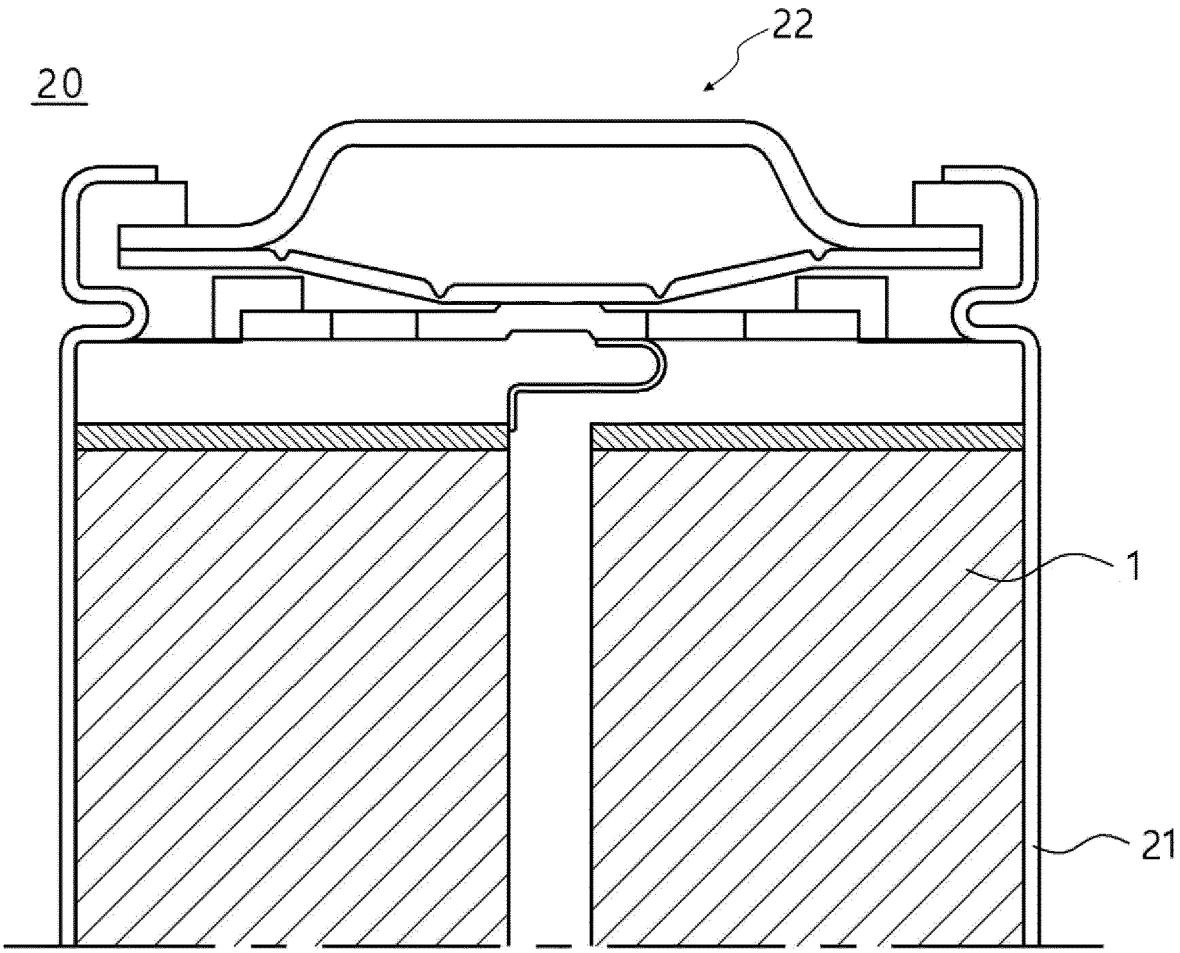

[Figure 12]

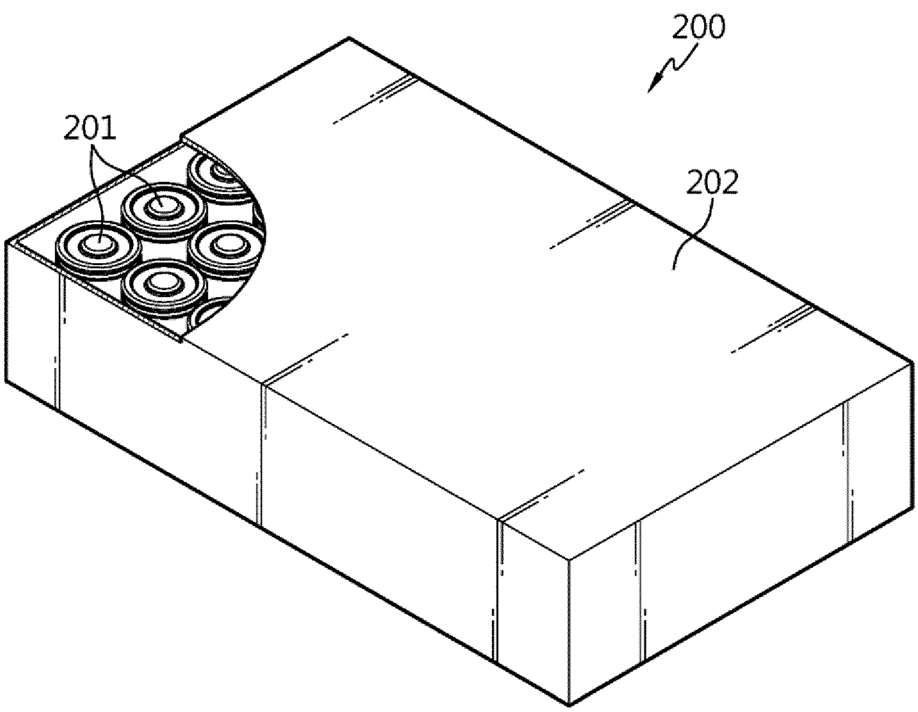


[Figure 13]

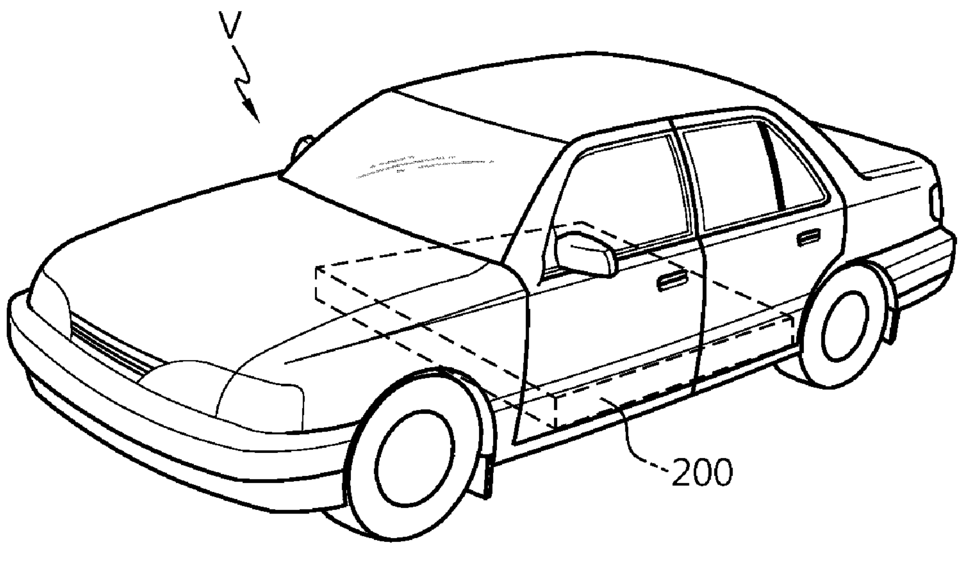

[Figure 14]

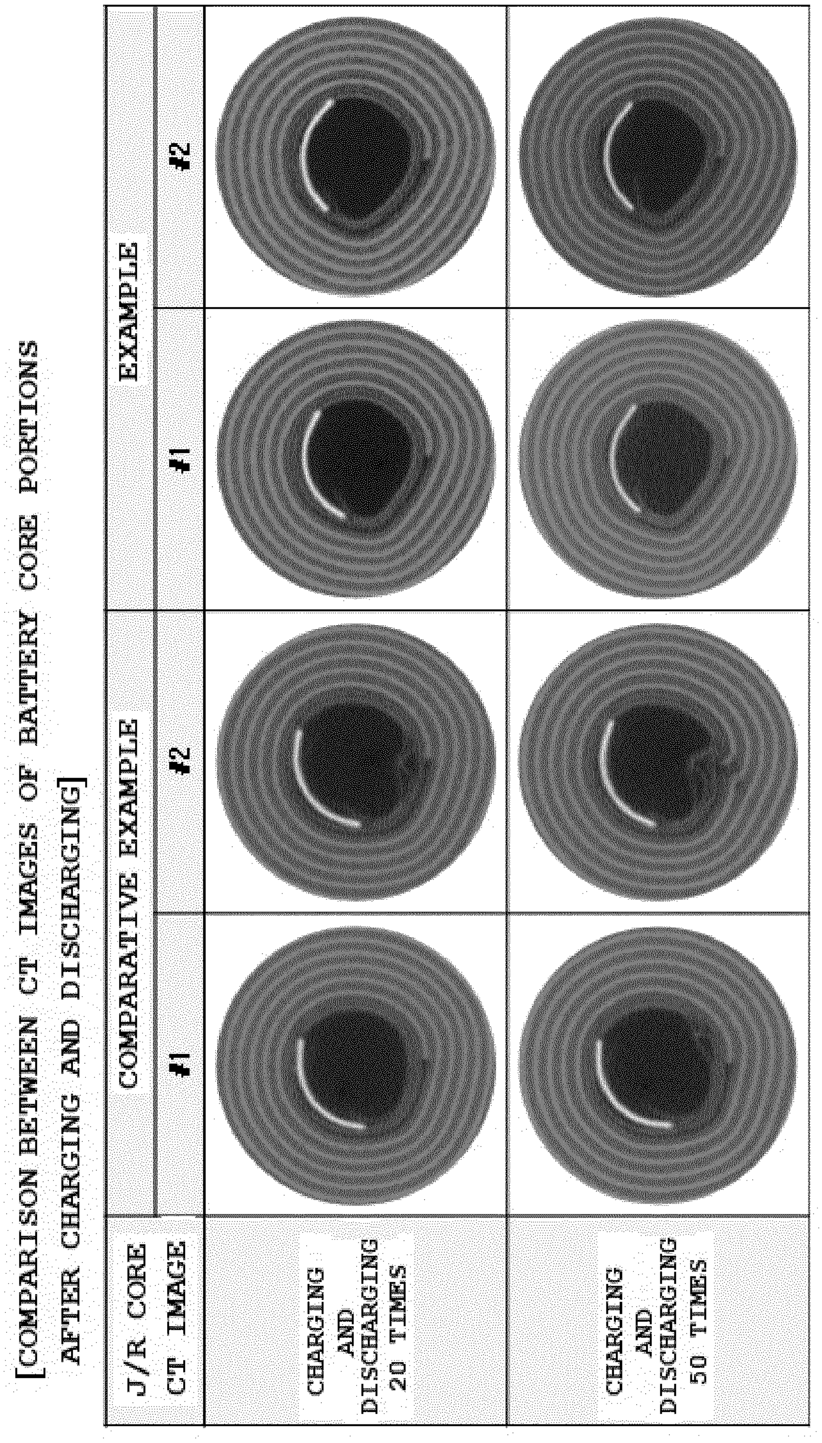
[COMPARISON BETWEEN CT IMAGES OF BATTERY CORE PORTIONS AFTER CHARGING AND DISCHARGING]
J/R CORE CT IMAGE
COMPARATIVE EXAMPLE
EXAMPLE
#1
#2
#1
#2
CHARGING AND DISCHARGING 20 TIMES
CHARGING AND DISCHARGING 50 TIMES

[Figure 15]

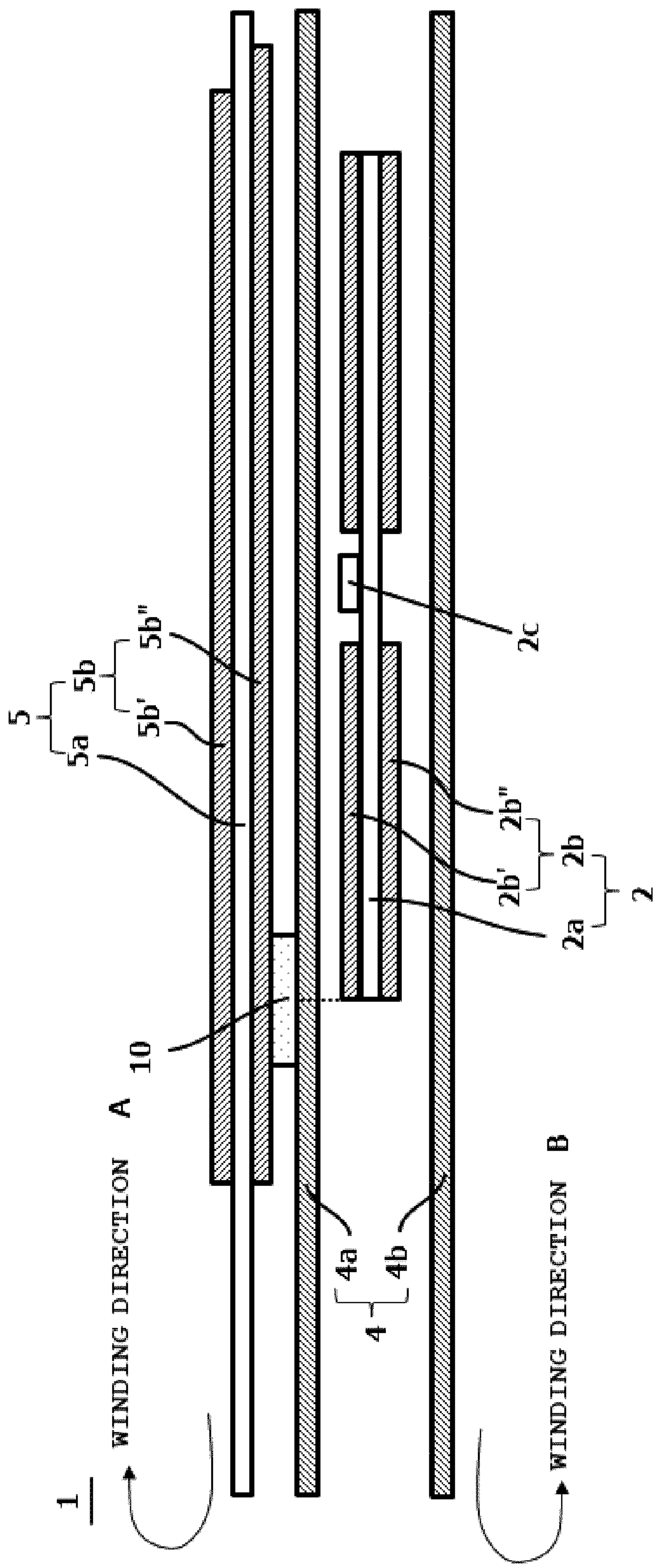
1
WINDING DIRECTION A
WINDING DIRECTION B
10
5
5a
5b
5b'
5b"
2c
2b"
2b'
2b
2a
2
4
4a
4b

[Figure 16]

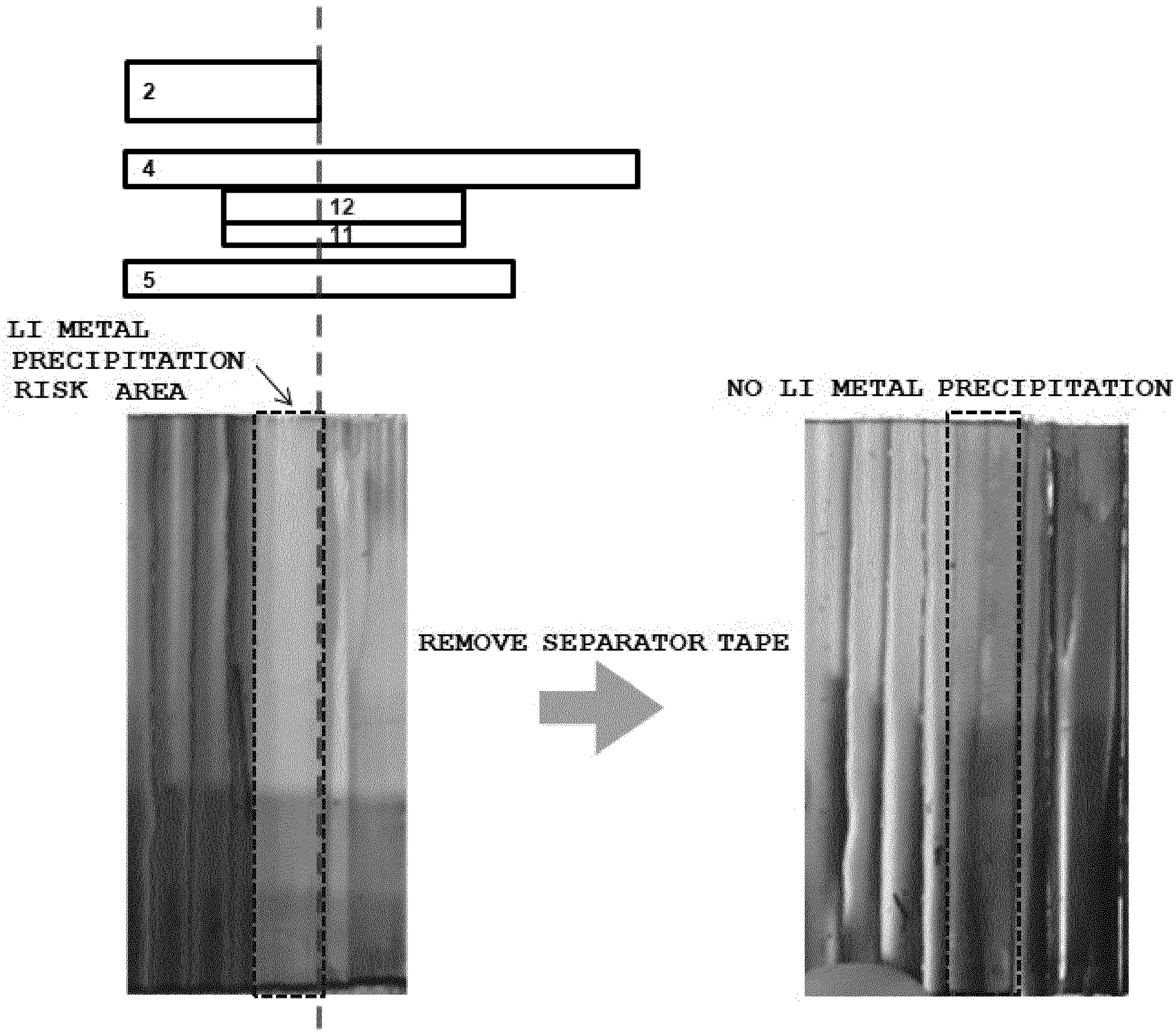
2
4
12
11
5
LI METAL PRECIPITATION RISK AREA
REMOVE SEPARATOR TAPE
NO LI METAL PRECIPITATION

## INTERNATIONAL SEARCH REPORT

International application No.
**PCT/KR2023/015806**

**A. CLASSIFICATION OF SUBJECT MATTER**

**H01M 10/0587**(2010.01)i; **H01M 10/42**(2006.01)i; **H01M 10/052**(2010.01)i; **C09J 7/38**(2018.01)i; **C09J 133/08**(2006.01)i

According to International Patent Classification (IPC) or to both national classification and IPC

**B. FIELDS SEARCHED**

Minimum documentation searched (classification system followed by classification symbols)

H01M 10/0587(2010.01); H01M 10/04(2006.01); H01M 2/02(2006.01); H01M 50/50(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극조립체(electrode assembly), 전해질(electrolyte), 점착(adhesion), 팽창(expansion), 테이프(tape)

**C. DOCUMENTS CONSIDERED TO BE RELEVANT**

| Category* | Citation of document, with indication, where appropriate, of the relevant passages | Relevant to claim No. |
|---|---|---|
| X<br>Y | KR 10-2018-0008037 A (LG CHEM, LTD.) 24 January 2018 (2018-01-24)<br>See paragraphs [0004] and [0021]-[0040] and figures 1-4. | 1-2,6,12-16<br>3-5,7-11 |
| Y | JP 6558440 B2 (MURATA MFG CO., LTD.) 14 August 2019 (2019-08-14)<br>See paragraphs [0047], [0052]-[0061] and [0068] and figures 1-2. | 3-5,7-11 |
| A | KR 10-2422921 B1 (LG ENERGY SOLUTION, LTD.) 20 July 2022 (2022-07-20)<br>See claim 1 and figures 1-2. | 1-16 |
| A | KR 10-2019-0032058 A (SAMSUNG SDI CO., LTD.) 27 March 2019 (2019-03-27)<br>See paragraphs [0046]-[0061] and figures 2-5. | 1-16 |
| A | KR 10-2022-0015707 A (LG ENERGY SOLUTION, LTD.) 08 February 2022 (2022-02-08)<br>See claims 1-4 and figures 2-4. | 1-16 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 January 2024** | **29 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/015806**

| Patent document cited in search report | Publication date (day/month/year) | Patent family member(s) | Publication date (day/month/year) |
|---|---|---|---|
| KR 10-2018-0008037 A | 24 January 2018 | KR 10-2155163 B1 | 11 September 2020 |
| JP 6558440 B2 | 14 August 2019 | CN 108028433 A | 11 May 2018 |
| | | CN 108028433 B | 23 April 2021 |
| | | JP WO2017-043178 A1 | 28 June 2018 |
| | | US 10658650 B2 | 19 May 2020 |
| | | US 2018-0241026 A1 | 23 August 2018 |
| | | WO 2017-043178 A1 | 16 March 2017 |
| KR 10-2422921 B1 | 20 July 2022 | KR 10-2018-0113695 A | 17 October 2018 |
| KR 10-2019-0032058 A | 27 March 2019 | KR 10-2484705 B1 | 03 January 2023 |
| KR 10-2022-0015707 A | 08 February 2022 | CN 115039264 A | 09 September 2022 |
| | | EP 4089778 A1 | 16 November 2022 |
| | | JP 2023-510832 A | 15 March 2023 |
| | | JP 7363014 B2 | 18 October 2023 |
| | | US 2023-0087062 A1 | 23 March 2023 |
| | | WO 2022-025495 A1 | 03 February 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 2023015806 W
- KR 1020220154682